# EUROPÄISCHE PATENTSCHRIFT

(11) **EP 3 554 799 B1**
(45) Veröffentlichungstag und Bekanntmachung des Hinweises auf die Patenterteilung: **25.11.2020**
(21) Anmeldenummer: 17821849.1
(22) Anmeldetag: 11.12.2017
(51) Int. Cl.: B29C 65/02, B29C 65/16, F16L 25/01, F16L 47/02, B29K 105/16, B29L 31/24

(54) **KUNSTSTOFFFORMTEIL FÜR EINE FORMTEILANORDNUNG, ENTSPRECHENDE FORMTEILANORDNUNG SOWIE VERFAHREN ZUM HERSTELLEN EINER FORMTEILANORDNUNG**
PLASTIC MOULDING FOR A MOULDING ARRANGEMENT, CORRESPONDING MOULDING ARRANGEMENT, AND METHOD FOR PRODUCING A MOULDING ARRANGEMENT
PIÈCE MOULÉE EN MATIÈRE PLASTIQUE POUR UN ENSEMBLE DE PIÈCES MOULÉES, ENSEMBLE DE PIÈCES MOULÉES CORRESPONDANT AINSI QUE PROCÉDÉ DE FABRICATION D'UN ENSEMBLE DE PIÈCES MOULÉES

(30) Priorität: 19.12.2016 DE 102016225415
(43) Veröffentlichungstag der Anmeldung: 23.10.2019
(73) Patentinhaber: aft automotive GmbH, 48268 Greven-Reckenfeld (DE)
(72) Erfinder: WEHRMANN, Christoph, 48493 Wettringen (DE)
(74) Vertreter: Dietz, Christopher Friedrich
(86) Internationale Anmeldenummer: PCT/EP2017/082239
(87) Internationale Veröffentlichungsnummer: WO 2018/114437

(56) Entgegenhaltungen:
- EP-A1- 1 403 030
- DE-U1-202007 006 954

## Beschreibung

Die Erfindung betrifft ein Kunststoffformteil für eine Formteilanordnung, mit einer durch Ausbildung einer Stufe gestuften Aufnahme für ein weiteres Kunststoffformteil der Formteilanordnung, wobei die gestufte Aufnahme in einem Formteilkörper des Kunststoffformteils ausgebildet ist, der wenigstens bereichsweise aus einem schweißbaren Material besteht. Die Erfindung betrifft weiterhin eine Formteilanordnung sowie ein Verfahren zum Herstellen einer Formteilanordnung.

Das Kunststoffformteil liegt beispielsweise als Bestandteil der Formteilanordnung vor, welche neben dem Kunststoffformteil das weitere Kunststoffformteil aufweist. Das Kunststoffformteil kann insoweit auch als erstes Kunststoffformteil und weitere Kunststoffformteil als zweites Kunststoffformteil bezeichnet werden. Es ist vorgesehen, das Kunststoffformteil und das weitere Kunststoffformteil separat voneinander herzustellen beziehungsweise auszubilden und nachfolgend aus dem Kunststoffformteil und dem weiteren Kunststoffformteil die Formteilanordnung herzustellen, indem das Kunststoffformteil und weitere Kunststoffformteil miteinander verbunden werden, nämlich mittels Schweißen, vorzugsweise mittels Laserschweißen. Auch andere Schweißverfahren können jedoch herangezogen werden, sodass das Schweißen als Rotationsschweißen, Heißgasschweißen, Infrarotschweißen, Vibrationsschweißen, Ultraschallschweißen, Reibschweißen oder Hochfrequenzschweißen durchgeführt wird.

Um das Schweißen zu ermöglichen, besteht das Kunststoffformteil wenigstens bereichsweise aus dem schweißbaren Material, wobei das schweißbare Material derart an dem Kunststoffformteil angeordnet ist, dass es während des Schweißens aufschmilzt und eine stoffschlüssige Verbindung des Kunststoffformteils zu dem weiteren Kunststoffformteil ausbildet. Zur Ausbildung der Formteilanordnung, also zum Verbinden des Kunststoffformteils mit dem weiteren Kunststoffformteil wird Letzteres in der Aufnahme des Kunststoffformteils angeordnet. Die Aufnahme liegt in dem Formteilkörper des Kunststoffformteils vor, welcher wenigstens bereichsweise aus dem bereits erwähnten schweißbaren Material besteht.

Beispielsweise liegen das Kunststoffformteil und das weitere Kunststoffformteil jeweils als Fluidleitungselement vor. Bevorzugt ist das Kunststoffformteil eine Fluidkupplung, insbesondere eine Fluidschnellkupplung, während das weitere Kunststoffformteil eine Fluidleitung oder ein Fluidrohr ist. Derartige Anordnungen aus Fluidkupplung und Fluidleitung werden häufig im Kraftfahrzeugbereich, beispielsweise zur Herstellung einer Kraftstoffverbindung verwendet. Es kann vorgesehen sein, dass das Kunststoffformteil und weitere Kunststoffformteil mittels unterschiedlicher Herstellungsprozesse hergestellt werden. Beispielsweise wird das Kunststoffformteil durch Spritzgießen und das weitere Kunststoffformteil durch Extrudieren ausgebildet. Das Kunststoffformteil kann insoweit als Spritzgießformteil und das weitere Kunststoffformteil als Extrusionsformteil vorliegen.

Aus dem Stand der Technik ist beispielsweise die Druckschrift WO 2008/068328 A2 bekannt. Diese beschreibt ein Verfahren zum Laserschweißen von zumindest zwei Bauteilen aus Kunststoff, insbesondere eines Rohrs und einer Tragplatte, wobei das erste Bauteil zumindest bereichsweise für einen beim Laserschweißen verwendeten Laserstrahl eine relativ hohe Durchlässigkeit aufweist und wobei das zweite Bauteil zumindest bereichsweise für den beim Laserschweißen verwendeten Laserstrahl eine relativ niedrige Durchlässigkeit aufweist. Eine kompakte Bauform für die Bauteile soll erzielt werden, indem der Laserstrahl beim Laserschweißen durch Brechung und/oder Reflektion zur jeweiligen Schweißstelle gelangt. Eine derartige Vorgehensweise ist allenfalls mit sehr hohem Aufwand zu überwachen. Entsprechende Einrichtungen sind technisch lediglich schwierig und kostenintensiv umzusetzen.

Weiter ist aus dem Stand der Technik die Druckschrift DE 20 2007 006 954 U1 bekannt. Diese beschreibt eine Verbindungsvorrichtung für Medien, bestehend aus einem Anschlussteil aus Kunststoff mit mindestens einem Anschlussabschnitt mit einer Aufnahmeöffnung für ein rohrförmiges, mittels Laserstrahl zu verschweißendes Leitungsende. Dabei ist vorgesehen, dass das Anschlussteil aus mindestens zwei Komponenten mit unterschiedlichem Materialeigenschaft besteht, wobei eine erste Komponente im Bereich des Anschlussabschnitts die Aufnahmeöffnung umschließt und aus einem für Laserstrahlen weitgehend transparenten Material besteht.

Es ist Aufgabe der Erfindung, ein Kunststoffformteil für eine Formteilanordnung vorzuschlagen, welches gegenüber bekannten Kunststoffformteilen Vorteile aufweist, insbesondere zum einen ein zuverlässiges und prozesssicheres Verbinden des Kunststoffformteil mit dem weiteren Kunststoffformteil und zum anderen eine elektrische Kontaktierung des Kunststoffformteils mit dem weiteren Kunststoffformteil ermöglicht.

Dies wird erfindungsgemäß mit dem Kunststoffformteil mit den Merkmalen des Anspruchs 1 erreicht. Dabei ist vorgesehen, dass an dem Formteilkörper ein Kontaktelement angeordnet ist, das wenigstens teilweise aus einem elektrisch leitfähigen Material besteht und eine sich an die Aufnahme anschließende Ausnehmung des Formteilkörpers wenigstens bereichsweise begrenzt, wobei das Kontaktelement einen Vorsprung aufweist, der in der Ausnehmung angeordnet ist und in Richtung der Aufnahme bis zu einer Innenkante der Stufe ragt.

Insbesondere wenn die Formteilanordnung und mithin das Kunststoffformteil und weitere Kunststoffformteil zur Kraftstoffführung im Kraftfahrzeugbereich ausgestaltet sind, ist zur Vermeidung elektrostatischer Aufladung notwendig, eine elektrische Kontaktierung zwischen dem Kunststoffformteil und dem weiteren Kunststoffformteil herzustellen. Die Anforderungen an eine solche elektrische Kontaktierung haben Eingang in zahlreiche Normen gefunden, beispielsweise in die SAE J1645 und die VW TL52712. Dabei wird ein Flächenwiderstand beziehungsweise ein Oberflächenwiderstand von weniger als 10E+06 Ω/square beziehungsweise ein Volumenwiderstand von weniger als 10E+06 Ωcm verlangt.

Um die elektrische Anbindung des weiteren Kunststoffformteils an das Kunststoffformteil zu ermöglichen, verfügt Letzteres über das Kontaktelement, welches vorzugsweise an dem Formteilkörper befestigt ist oder als Einlegeteil ausgeführt ist. In ersterem Fall kann das Kontaktelement in den Formteilkörper eingepresst, rastend an ihm befestigt oder mit ihm verschweißt sein. Bei der Ausgestaltung als Einlegeteil ist das Kontaktelement lediglich lose in den Formteilkörper eingelegt. Insbesondere liegt das Kontaktelement vor dem Schweißen lose in dem Formteilkörper vor. Bevorzugt wird das Kontaktelement während des Schweißens mit dem Formteilkörper stoffschlüssig verbunden. Das Kontaktelement besteht wenigstens teilweise aus dem elektrisch leitfähigen Material, welches zugleich laserabsorbierend sein kann. Beispielsweise wird als Material ein Kunststoff verwendet, welcher durch wenigstens einen Zusatzstoff elektrisch leitfähig gemacht wird. Als Zusatzstoff wird bevorzugt Kohlenstoff verwendet, welcher insbesondere in Form von Kohlefasern und/oder Ruß dem Kunststoff beigemengt wird. Alternativ oder zusätzlich kann ein Metall, beispielsweise Eisen, Kupfer oder eine entsprechende Legierung, als Zusatzstoff herangezogen werden. Selbstverständlich ist auch die Verwendung eines anderen Zusatzstoffs möglich, solange mittels diesem die elektrische Leitfähigkeit des Materials hergestellt werden kann. Der Kunststoff kann jedoch auch intrinsisch leitfähig sein, beispielsweise durch Realisierung einer konjugierten Doppelbindung.

Bevorzugt bestehen das Kontaktelement und der Formteilkörper aus demselben Grundmaterial, nämlich demselben Kunststoff. Das Material des Kontaktelements kann sich jedoch hinsichtlich des wenigstens einen Zusatzstoffs von dem Material des Formteilkörpers unterscheiden. Beispielsweise setzt sich also das Material des Kontaktelements aus dem Grundmaterial und dem wenigstens einen Zusatzstoff zusammen, während das Material des Formteilkörpers dem Grundmaterial entspricht, welchem wenigstens ein anderer Zusatzstoff oder kein Zusatzstoff beigefügt ist.

Besonders bevorzugt ist das Material des Kontaktelements laserabsorbierend, wohingegen das Material des Formteilkörpers lasertransparent ist. Ein lasertransparentes Material weist für die Wellenlänge oder den Wellenlängenbereich des zum Laserschweißen verwendeten Laserstrahls beziehungsweise Laserlichts einen höheren Transmissionsgrad auf als das laserabsorbierende Material. Umgekehrt weist also das laserabsorbierende Material für die Wellenlänge oder den Wellenlängenbereich des Laserstrahls beziehungsweise Laserlichts eine größere Opazität auf als das Material des Formteilkörpers.

Das Material des Formteilkörpers und/oder das Material des Kontaktelements sind mit einem Material des weiteren Kunststoffformteils verschweißbar, nämlich beispielsweise per Laserschweißen. Das bedeutet, dass das Material des Kontaktelements und/oder das Material des Formteilkörpers durch das Schweißen eine stoffschlüssige Verbindung mit dem Material des weiteren Kunststoffformteils eingehen beziehungsweise in eine solche gebracht werden. Im Falle des Laserschweißens wird der dazu verwendete Laserstrahl zum Beispiel derart ausgerichtet, dass er zunächst das Kunststoffformteil, insbesondere den Formteilkörper, passiert und zumindest teilweise durch das Kunststoffformteil beziehungsweise den Formteilkörper hindurch zu dem weiteren Kunststoffformteil gelangt. Der Laserstrahl ist also wenigstens teilweise auf das Kunststoffformteil ausgerichtet. Bevorzugt tritt der, das weitere Kunststoffformteil erreichende Laserstrahl oder Teil des Laserstrahls vollständig durch das Kunststoffformteil beziehungsweise den Formteilkörper hindurch, zumindest im Halbschnitt gesehen. Dies wird durch einen entsprechenden Transmissionsgrad des Materials des Formteilkörpers erzielt.

Das weitere Kunststoffformteil kann hingegen wenigstens bereichsweise aus einem laserabsorbierenden Material bestehen. Entsprechend wird während des Laserschweißens durch den Laserstrahl Energie in das weitere Kunststoffformteil eingetragen und dort in dem laserabsorbierenden Material in Wärme umgesetzt. Bei anderen Schweißverfahren wird in das Material ebenfalls Wärme eingetragen. Folglich erwärmt sich das weitere Kunststoffformteil während des Schweißens bereichsweise oder zumindest wenigstens bereichsweise, zum Beispiel unter dem Einfluss des Laserstrahls. Während des Schweißens wird das weitere Kunststoffformteil beziehungsweise das Material des Kunststoffformteils aufgrund der während des Schweißens erzeugten Wärme bereichsweise aufgeschmolzen, wodurch sich eine stoffschlüssige Verbindung des weiteren Kunststoffformteils mit dem Kunststoffformteil, nämlich insbesondere mit dem Formteilkörper des Kunststoffformteils, ergibt.

Zusätzlich oder alternativ kann die in dem weiteren Kunststoffformteil anfallende Wärme durch Wärmeübertragung von dem weiteren Kunststoffformteil auf das Kunststoffformteil übertragen werden, sodass sich auch dessen Temperatur erhöht. Dies kann dazu führen, dass auch das Kunststoffformteil beziehungsweise das Material des Kunststoffformteils bereichsweise oder wenigstens bereichsweise aufgeschmolzen wird und sich mit dem weiteren Kunststoffformteil beziehungsweise dem Material des weiteren Kunststoffformteils, insbesondere dem aufgeschmolzenen Teil des weiteren Kunststoffformteils beziehungsweise dem aufgeschmolzenen Material des weiteren Kunststoffformteils, verbindet. Um das Laserschweißen zu ermöglichen, ist das Material des Formteilkörpers vorzugsweise lasertransparent. Im Falle anderer Schweißverfahren muss dies nicht der Fall sein. Weil die vorstehend erwähnten Maßnahmen zum Erzielen einer elektrischen Leitfähigkeit eines Materials das Einbringen des wenigstens einen Zusatzstoffs, insbesondere von Kohlenstoff, erfordert, kann das elektrisch leitfähige Material, nämlich insbesondere das Material des Kontaktelements, laserabsorbierend sein. Im Umkehrschluss bedeutet dies, dass das Material des Kunststoffformteils elektrisch nicht leitfähig ist. Selbstverständlich kann jedoch auch ein Material zum Einsatz kommen, das lasertransparent und dennoch leitfähig ist. Hierzu wird zum Beispiel der Zusatzstoff entsprechend gewählt.

Insbesondere falls das Material des Formteilkörpers elektrisch nicht leitfähig ist, ist das Kontaktelement vorgesehen, welches die elektrische Verbindung der beiden Kunststoffformteile sicherstellt. Das Kontaktelement begrenzt die Ausnehmung des Kunststoffformteils wenigstens bereichsweise, insbesondere in axialer Richtung bezüglich einer Längsmittelachse des Kunststoffformteils beziehungsweise des Formteilkörpers. Beispielsweise erstreckt sich hierzu das Kontaktelement ausgehend von dem Formteilkörper in radialer Richtung nach innen. Die Ausnehmung schließt sich an die Aufnahme für das weitere Kunststoffformteil an, welche ebenfalls in die Kunststoffformteil, genauer gesagt in dem Formteilkörper ausgebildet ist. Die Aufnahme und die Ausnehmung bilden zusammen einen Hohlraum, welcher in dem Kunststoffformteil beziehungsweise dem Formteilkörper des Kunststoffformteils vorliegt.

Zum Verbinden des Kunststoffformteils mit dem weiteren Kunststoffformteil durch Schweißen ist es vorgesehen, zunächst das weitere Kunststoffformteil beziehungsweise einen Schweißbereich des weiteren Kunststoffformteils in der Aufnahme des Kunststoffformteils anzuordnen. Beispielsweise ist die Aufnahme gestuft. Anschließend wird das Schweißen vorgenommen, insbesondere also die Formteilanordnung mit dem Laserstrahl beaufschlagt beziehungsweise andere geeignete Maßnahmen zur Durchführung des entsprechenden Schweißverfahrens umgesetzt. Bevorzugt ist es vorgesehen, die beiden Kunststoffformteile, also das Kunststoffformteil und das weitere Kunststoffformteil, während des Schweißens in einer Verlagerungsrichtung aufeinander zu zu verlagern. Die dabei verwendete Verlagerungsrichtung liegt bevorzugt in Richtung der Längsmittelachse des Kunststoffformteils und/oder einer Längsmittelachse des weiteren Kunststoffformteils beziehungsweise parallel zu dieser vor. Die Längsmittelachse des Kunststoffformteils und/oder die Längsmittelachse des weiteren Kunststoffformteils entsprechen beispielsweise der Längsmittelachse einer in der jeweiligen Kunststoffformteil vorliegenden Ausnehmung, im Falle des Kunststoffformteils also insbesondere der Aufnahme.

Um eine besonders prozesssichere Durchführung des Schweißens zu ermöglichen, kann zumindest das Kunststoffformteil über eine spezielle Ausgestaltung beziehungsweise Formgebung verfügen. So weist es die Aufnahme auf, die zur wenigstens bereichsweisen Aufnahme des weiteren Kunststoffformteils beziehungsweise des Schweißbereichs ausgebildet ist. Die Aufnahme kann als gestufte Aufnahme vorliegen. Unter der gestuften Aufnahme ist eine Ausnehmung des Kunststoffformteils zu verstehen, die in Richtung einer Längsmittelachse des Kunststoffformteils unterschiedliche Querschnitte aufweist, also in in axialer Richtung voneinander beabstandeten Querschnitten über unterschiedliche Abmessungen beziehungsweise Querschnittsflächen verfügt. Der Schweißbereich ist ein Bereich beziehungsweise Teilbereich des weiteren Kunststoffformteils, welches mittels des Schweißens formschlüssig mit dem die Aufnahme aufweisende Kunststoffformteil verbunden wird. Auch andere Ausgestaltungen, insbesondere nicht gestufte Ausgestaltungen, der Aufnahme sind ohne weiteres realisierbar. Beispielsweise ist in diesem Fall die Aufnahme mit in axialer Richtung gleichbleibenden Abmessungen ausgeführt.

Die Aufnahme ist als gestufte Aufnahme ausgebildet, sodass in ihr für das formschlüssige Verbinden mittels des Schweißens eine Stufe ausgebildet ist, durch welche die Abmessungen beziehungsweise die Querschnittsfläche der Aufnahme verändert wird. Bevorzugt stellt die Stufe ein Anlageelement beziehungsweise einen Endanschlag für das weitere Kunststoffformteil dar. An der Stufe liegt insoweit eine Anlagefläche für das weitere Kunststoffformteil vor. Bevorzugt ist es vorgesehen, das weitere Kunststoffformteil in die gestufte Aufnahme einzubringen, bis es an der Stufe anliegt. Anschließend wird das Schweißen durchgeführt. Während des Schweißens werden das weitere Kunststoffformteil und das Kunststoffformteil, insbesondere dessen Stufe, aneinander gepresst. Aufgrund des durch das Schweißen aufgeschmolzenen Materials des Kunststoffformteils und/oder des weiteren Kunststoffformteils können die beiden Kunststoffformteile aufeinander zu verlagert werden, was durch das Aufbringen einer entsprechenden Verlagerungskraft auf das Kunststoffformteil und/oder das weitere Kunststoffformteil bewirkt wird.

Bevorzugt ist die Aufnahme wenigstens bereichsweise, insbesondere vollständig, zylindrisch, insbesondere kreiszylindrisch oder unrund. In Abhängigkeit von einer Ausrichtung der Stufe können sich jedoch auch andere Formen der Aufnahme ergeben. Anders ausgedrückt kann es vorgesehen sein, dass die Aufnahme, insbesondere abseits der Stufe, zylindrisch, insbesondere kreiszylindrisch oder unrund ist, besonders bevorzugt vollständig. Grundsätzlich kann die Aufnahme im Querschnitt also beliebig ausgestaltet sein, insbesondere rund, oval, stadionförmig, mehreckig oder dergleichen. Die Aufnahme erstreckt sich beispielsweise - zumindest in axialer Richtung gesehen - von der Ausnehmung und/oder der Stufe bis hin zu einer der Ausnehmung und/oder der Stufe gegenüberliegenden Mündungsöffnung der Aufnahme.

Zum Durchführen des Laserschweißens wird der Laserstrahl erzeugt, welcher nachfolgend das Kunststoffformteil und/oder das weitere Kunststoffformteil bereichsweise aufschmilzt. Der Laserstrahl ist bevorzugt in radialer Richtung nach innen gerichtet. Insoweit wird eine Außenverschweißung von in radialer Richtung außen vorgenommen. Unter der Ausrichtung des Laserstrahls in radialer Richtung ist zu verstehen, dass eine radiale Komponente seine Ausrichtung beziehungsweise seines Ausrichtungssektors von null verschieden ist, oder dass der Laserstrahl ausschließlich in radialer Richtung verläuft, die radiale Komponente also die einzige von null verschiedene Komponente der Ausrichtung des Laserstrahls ist. Im Falle eines anderen Schweißverfahrens wird auf andere geeignete Art und Weise Wärme in das Kunststoffformteil und/oder das weitere Kunststoffformteil derart eingebracht, dass es beziehungsweise sie bereichsweise aufschmilzt.

Der Laserstrahl kann bereits erzeugt werden, bevor das weitere Kunststoffformteil in der Aufnahme angeordnet ist, wenn also das weitere Kunststoffformteil außerhalb der Aufnahme vorliegt. Alternativ kann es vorgesehen sein, das der Laserstrahl während des Einbringens des weiteren Kunststoffformteils in die Aufnahme erzeugt wird, insbesondere also bevor das weitere Kunststoffformteil an der Stufe anliegt. Besonders bevorzugt wird jedoch zunächst das weitere Kunststoffformteil soweit als möglich in die Aufnahme eingebracht, insbesondere also bis es an der Stufe des Kunststoffformteils anliegt. Erst anschließend wird der Laserstrahl zum Durchführen des Laserschweißens erzeugt und während des Vorliegens des Laserstrahls die beiden Kunststoffformteile aufeinander zu verlagert.

Das Aufeinanderzuverlagern erfolgt bevorzugt durch das Ausüben einer entsprechenden Verlagerungskraft auf das Kunststoffformteil und/oder das weitere Kunststoffformteil. Es kann vorgesehen sein, die Verlagerungskraft bereits vor Durchführend des Schweißens, insbesondere vor dem Erzeugen des Laserstrahls, auf das Kunststoffformteil und/oder das weitere Kunststoffformteil aufzuprägen. Zusätzlich oder alternativ kann es vorgesehen sein, die Verlagerungskraft auch nach einem Ende des Schweißens, insbesondere also einem Deaktivieren des Laserstrahls, in Form einer Haltekraft, zumindest über eine bestimmte Haltezeit, insbesondere genau über die bestimmte Haltezeit, auf das Kunststoffformteil und/oder das weitere Kunststoffformteil aufzuprägen. Zum Verlagern der Kunststoffformteile aufeinander zu beziehungsweise zum Aufprägen der Verlagerungskraft kann eines der Kunststoffformteile ortsfest gehalten werden und das jeweils andere mit der Verlagerungskraft beaufschlagt werden beziehungsweise tatsächlich verlagert werden. Es kann insoweit vorgesehen sein, dass zum Verlagern des Kunststoffformteils und des weiteren Kunststoffformteils aufeinander zu nur das Kunststoffformteil, nur das weitere Kunststoffformteil oder beide Kunststoffformteile verlagert wird/werden.

Eine weitere Ausgestaltung der Erfindung sieht vor, dass der Vorsprung an einer Innenumfangsfläche des die Aufnahme begrenzenden Formteilkörpers anliegt. Der Vorsprung liegt insoweit in dem Hohlraum des Kunststoffformteils vor und erstreckt sich wenigstens teilweise durch die Ausnehmung hindurch in Richtung der Aufnahme. Besonders bevorzugt schließt er bündig mit der Ausnehmung ab, steht also nicht in die Aufnahme über. In radialer Richtung gesehen liegt der Vorsprung an der Innenumfangsfläche des Formteilkörpers an. Die Innenumfangsfläche begrenzt die Aufnahme in radialer Richtung nach außen. Der Vorsprung weist eine Außenumfangsfläche auf, welche an der Innenumfangsfläche anliegt, vorzugsweise vollflächig.

Im Rahmen einer weiteren bevorzugten Ausgestaltung der Erfindung ist vorgesehen, dass der Vorsprung von einem Grundkörper des Kontaktelements ausgeht, der an einer Stirnseite des Formteilkörpers angeordnet ist, insbesondere an dieser anliegt. Der Vorsprung steht über den Grundkörper über, insbesondere in axialer Richtung. Der Grundkörper ist wiederum an der Stirnseite des Formteilkörpers angeordnet beziehungsweise liegt mit der Stirnseite in radialer Richtung gesehen in Überdeckung vor. Das bedeutet, dass der Grundkörper in radialer Richtung gesehen mit der Stirnseite des Formteilkörpers überlappt. Bevorzugt liegt der Grundkörper an der Stirnseite des Formteilkörpers an beziehungsweise ist mit dieser verbunden. Beispielsweise ist der Grundkörper an der Stirnseite des Formteilkörpers befestigt, insbesondere stoffschlüssig. Auch eine kraftschlüssige und/oder formschlüssige Befestigung des Grundkörpers an dem Formteilkörper kann jedoch vorgesehen sein.

Eine weitere Ausführungsform der Erfindung sieht vor, dass der Vorsprung bis zu einer Innenkante der Stufe ragt, insbesondere an der Innenkante bündig mit dem Stufe abschließt, sodass der weitere Formteilkörper bei Anordnung in der Aufnahme an dem Vorsprung anliegt. Unter der Innenkante ist eine in radialer Richtung innenliegende Kante der Stufe zu verstehen. Beispielsweise schließt sich unmittelbar an die Innenkante derjenige Bereich der Innenumfangsfläche des Formteilkörpers an, an welchem das Kontaktelement beziehungsweise sein Vorsprung anliegt. Bevorzugt schließt der Vorsprung bündig mit der Stufe ab. Bei einer derartigen Ausgestaltung kann es vorgesehen sein, dass der Vorsprung an dem weiteren Formteilkörper anliegt, sobald dieser in der Aufnahme an der Stufe anliegend angeordnet ist. Weil sowohl das weitere Kunststoffformteil als auch das Kontaktelement vorzugsweise aus einem laserabsorbierenden Material bestehen, wird - im Falle des Laserschweißens - durch das Aufeinandertreffen des weiteren Formteilkörpers und des Vorsprungs ein weiteres Eindringen des Laserstrahls in das Kunststoffformteil in radialer Richtung beziehungsweise in Richtung seiner Längsmittelachse unterbunden. Vielmehr wird der Laserstrahl von dem weiteren Kunststoffformteil und dem Vorsprung gemeinsam begrenzt, insbesondere wenigstens teilweise von dem weiteren Kunststoffformteil und wenigstens teilweise von dem Vorsprung. Dies kann zumindest teilweise durch Absorption des Laserstrahls erfolgen.

Eine weitere bevorzugte Ausführungsform der Erfindung sieht vor, dass das Kunststoffformteil ein Hohlzylinderelement aufweist, das in der Ausnehmung angeordnet ist und die Aufnahme in radialer Richtung nach innen begrenzend in die Aufnahme hineinragt. Das Hohlzylinderelement dient beispielsweise der Strömungsführung. Insbesondere wird mittels des Hohlzylinderelements sichergestellt, dass kein aufgeschmolzenes Material des Kunststoffformteils und/oder des weiteren Kunststoffformteils in einen strömungsführenden Bereich des Kunststoffformteils gelangt. Das Hohlzylinderelement ist in der Ausnehmung angeordnet und erstreckt sich bis in die Aufnahme hinein. Insbesondere durchgreift es die Aufnahme in axialer Richtung wenigstens bereichsweise.

Es kann vorgesehen sein, dass die Außenumfangsfläche des Hohlzylinderelements Rillen aufweist beziehungsweise von diesen durchgriffen ist, die bevorzugt in axialer Richtung verlaufen, insbesondere jeweils eine zu der Längsmittelachse des Kunststoffformteils parallele Längsmittelachse aufweisen. Die Rillen liegen insoweit in radialer Richtung nach außen randoffen an dem Hohlzylinderelement vor und dienen während des Schweißens zur Aufnahme beziehungsweise dem Transport von geschmolzenem Material, insbesondere des Kunststoffformteils, des weiteren Kunststoffformteils und/oder der Kontaktelements.

Beispielsweise weist der in die Aufnahme hineinragende Teil des Hohlzylinderelements Abmessungen in axialer Richtung auf, welche bezogen auf die Abmessungen des Vorsprungs des Kunststoffformteils in derselben Richtung größer sind, beispielsweise mind. 110 %, mind. 120 %, mind. 125 %, mind. 130 %, mind. 140 % oder mind. 150 % betragen. Das Hohlzylinderelement ist vorzugsweise kreiszylindrisch ausgestaltet und liegt insoweit als Hohlkreiszylinderelement vor. Auch eine unrunde Ausführungsform des Hohlzylinderelements ist ohne weiteres realisierbar. Es begrenzt die Aufnahme in radiale Richtung nach innen, nämlich mit seiner Außenumfangsfläche.

Eine Weiterbildung der Erfindung sieht vor, dass das Hohlzylinderelement aus einem lasertransparenten Material besteht und/oder eine Wandstärke aufweist, die geringer ist als eine Wandstärke des Formteilkörpers und/oder eine Wandstärke des Vorsprungs. Grundsätzlich kann das Hohlzylinderelement beliebig ausgestaltet sein. Dies insbesondere, wenn der weitere Formteilkörper nach seiner Anordnung in der Aufnahme an dem Vorsprung anliegt, insbesondere stirnseitig. In diesem Fall wird verhindert, dass der Laserstrahl während des Laserschweißens hin zu dem Hohlzylinderelement gelangt und dieses erwärmt. Aufgrund allfälliger Toleranzen können jedoch Spalte vorliegen, durch welche ein Teil des Laserstrahls hindurch gelangen kann, sodass zumindest ein geringer Einfluss auf das Hohlzylinderelement auftreten könnte. Dieser wird durch die Ausgestaltung des Hohlzylinderelements aus dem lasertransparenten Material verhindert. Dies macht es insbesondere auch möglich, das Hohlzylinderelement mit einer vergleichsweise geringen Wandstärke auszugestalten, nämlich insbesondere einer Wandstärke, die kleiner ist als die Wandstärke des Formteilkörpers und/oder des Vorsprungs. Alternativ, insbesondere wenn ein anderes Schweißverfahren als Laserschweißen verwendet wird, kann das Material des Hohlzylinderelements jedoch elektrisch leitfähig sein. Im Falle des Laserschweißens kann es zudem besonders bevorzugt vorgesehen sein, dass das Material derart gewählt ist, dass es zum einen elektrisch leitfähig und zum anderen lasertransparent ist.

Eine weitere Ausführungsform der Erfindung sieht vor, dass der Vorsprung - in radialer Richtung gesehen - zwischen der Innenumfangsfläche des Formteilkörpers und einer Außenumfangsfläche des Hohlzylinderelements angeordnet ist. Eine derartige Anordnung liegt insbesondere im Halbschnitt gesehen vor. Entsprechend ist der Vorsprung in radialer Richtung gesehen weiter außen liegend als die Außenumfangsfläche des Hohlzylinderelements und weiter innenliegend als die Innenumfangsfläche des Formteilkörpers angeordnet. Beispielsweise erstreckt sich der Vorsprung parallel zu der Innenumfangsfläche und/oder der Außenumfangsfläche, welche wiederum zueinander parallel sein können. Es kann vorgesehen sein, dass der Vorsprung in radialer Richtung einerseits von der Innenumfangsfläche und andererseits von der Außenumfangsfläche beabstandet ist. Bevorzugt liegt er jedoch an einer der Flächen an, also an der Innenumfangsfläche oder an der Außenumfangsfläche, besonders bevorzugt an der Innenumfangsfläche des Formteilkörpers.

Eine weitere Ausgestaltung der Erfindung sieht vor, dass das Hohlzylinderelement und das Kontaktelement gemeinsam einen Aufnahmeraum für durch das Schweißen erzeugte Schmelze aufweist, der sich an die Aufnahme anschließt. Der Aufnahmeraum wird also bereichsweise von dem Hohlzylinderelement und bereichsweise von dem Kontaktelement begrenzt. Beispielsweise begrenzt das Hohlzylinderelement den Aufnahmeraum in radialer Richtung nach innen, während das Kontaktelement den Aufnahmeraum in axialer Richtung begrenzt, insbesondere in die von dem weiteren Kunststoffformteil beziehungsweise von der Aufnahme abgewandte Richtung. Der Aufnahmeraum schließt sich an die Aufnahme an, stellt also bevorzugt einen Bereich der Ausnehmung dar beziehungsweise liegt in dieser vor.

Weiterhin kann der Aufnahmeraum zumindest vor Beginn des Schweißens von dem Vorsprung begrenzt sein, nämlich in radialer Richtung nach außen. Insoweit liegt der Aufnahmeraum bevorzugt in radialer Richtung gesehen zwischen dem Hohlzylinderelement und dem Vorsprung vor, wird also in radialer Richtung nach innen von dem Hohlzylinderelement und in radialer Richtung nach außen von dem Kontaktelement beziehungsweise dem Vorsprung begrenzt. In axialer Richtung schließlich wird der Aufnahmeraum ebenfalls von dem Kontaktelement, nämlich seinem Grundkörper, begrenzt. Der Aufnahmeraum dient der Aufnahme von Schmelze, welche durch das Schweißen erzeugt wird. Unter der Schmelze ist dabei insbesondere aufgeschmolzenes Material des Kontaktelements, des Kunststoffformteils und/oder des weiteren Kunststoffformteils zu verstehen.

Eine besonders bevorzugte weitere Ausführungsform der Erfindung sieht vor, dass das Hohlzylinderelement über das Kontaktelement und/oder wenigstens einen Steg an dem Formteilkörper befestigt ist. Besonders bevorzugt ist das Hohlzylinderelement ausschließlich über das Kontaktelement an dem Formteilkörper befestigt, also lediglich mittelbar. Entsprechend greift das Kontaktelement einerseits an dem Hohlzylinderelement und andererseits an dem Formteilkörper an. Die Befestigung des Kontaktelements einerseits an dem Hohlzylinderelement und andererseits an dem Formteilkörper kann jeweils grundsätzlich beliebig ausgestaltet sein. Beispielsweise ist eine kraftschlüssige, formschlüssige und/oder stoffschlüssige Befestigung vorgesehen.

Alternativ oder zusätzlich kann selbstverständlich das Hohlzylinderelement unmittelbar an dem Formteilkörper anliegen und/oder an ihm befestigt und/oder einstückig mit ihm ausgeführt sein. Beispielsweise ist eine derartige Verbindung zwischen dem Hohlzylinderelement und dem Formteilkörper über wenigstens einen Steg hergestellt, der sich ausgehend von dem Hohlzylinderelement in radialer Richtung nach außen und entsprechend - im Halbschnitt gesehen - in Richtung des Formteilkörpers erstreckt. Der Steg kann einstückig und/oder materialeinheitlich mit dem Hohlzylinderelement und/oder dem Formteilkörper ausgestaltet sein. Vorzugsweise sind mehrere derartiger Stege vorgesehen, die in Umfangsrichtung besonders bevorzugt gleichmäßig verteilt angeordnet sind. In einer vorteilhaften Ausführungsform sind das Hohlzylinderelement und der Formteilkörper einstückig und materialeinheitlich miteinander ausgestaltet und hierzu über den Steg miteinander verbunden. Die Ausbildung von Hohlzylinderelement, Formteilkörper und Steg ist in diesem Fall während eines gemeinsamen Prozessschritts vorgesehen, beispielsweise durch Spritzgießen.

Es kann vorgesehen sein, dass das Kontaktelement derart angeordnet wird, dass es an dem Steg beziehungsweise den Stegen anliegt und sich in axialer Richtung an diesem beziehungsweise diesen abstützt. Dies ist insbesondere der Fall, falls das Kontaktelement als Einlegeteil vorliegt. Besonders vorteilhaft ist insoweit eine Ausgestaltung, bei welcher das Hohlzylinderelement, der Formteilkörper und der wenigstens eine Steg einstückig miteinander ausgestaltet sind und das Kontaktelement vor dem Schweißen in den Formteilkörper eingelegt wird, nämlich derart, dass er - in radialer Richtung im Halbschnitt gesehen - zwischen einer Außenumfangsfläche des Hohlzylinderelements und einer Innenumfangsfläche des Formteilkörpers angeordnet ist und sich dabei in axialer Richtung an dem wenigstens einen Steg abstützt.

Bevorzugt ist das Hohlzylinderelement in das Kontaktelement eingepresst, rastend mit ihm verbunden oder mit ihm verschweißt. Zusätzlich oder alternativ kann das Kontaktelement in den Formteilkörper eingepresst, rastend an ihm befestigt oder mit ihm verschweißt sein. Selbstverständlich kann es auch vorgesehen sein, dass das Hohlzylinderelement mit dem Kontaktelement, das Kontaktelement mit dem Formteilkörper und/oder das Hohlzylinderelement sowohl mit dem Kontaktelement als auch dem Formteilkörper einstückig hergestellt ist, beispielsweise mittels eines Mehrkomponentenspritzgießverfahrens. Insoweit bestehen die genannten Elemente aus unterschiedlichen Materialien, die während eines gemeinsamen Herstellungsverfahrens gleichzeitig oder nacheinander verarbeitet und dabei stoffschlüssig miteinander verbunden werden.

Eine Weiterbildung der Erfindung sieht vor, dass der Vorsprung in Umfangsrichtung durchgehend ausgebildet ist oder in Umfangsrichtung voneinander beabstandete Zungen aufweist. Ist der Vorsprung in Umfangsrichtung durchgehend ausgebildet, so verfügt er vorzugsweise auf seiner der Aufnahme zugewandten Seite über einen durchgehenden Rand, welcher insbesondere durchgehend in einer gedachten Ebene liegt, die besonders bevorzugt senkrecht auf einer Längsmittelachse des Kunststoffformteils steht. Auch ein unterbrochener Rand kann alternativ vorgesehen sein. In diesem Fall verfügt der Vorsprung über mehrere Zungen, die in Umfangsrichtung voneinander beabstandet sind und jeweils in Richtung der Aufnahme ragen. Vorzugsweise sind die Zungen in Umfangsrichtung gleichmäßig verteilt angeordnet. Grundsätzlich kann jedoch auch eine unregelmäßige Anordnung vorgesehen sein.

Schließlich kann in einer weiteren Ausführungsform der Erfindung vorgesehen sein, dass der Vorsprung in axialer Richtung eine Erstreckung aufweist, die mindestens so groß ist wie der Abstand des Hohlzylinderelements von dem Formteilkörper in radialer Richtung. Während des Schweißens soll der Vorsprung zumindest bereichsweise ebenfalls aufgeschmolzen werden, sodass er sich durch das Aufeinanderzuverlagern von Kunststoffformteil und weiterem Kunststoffformteil verformt. Um eine zuverlässige elektrische Kontaktierung des weiteren Kunststoffformteils mit dem Kontaktelement sicherzustellen, ist es von Vorteil, wenn sich der Vorsprung nach seinem Umformen über einen Großteil der dem Kontaktelement zugewandten Stirnseite des weiteren Kunststoffformteils erstreckt.

Dies ist der Fall, wenn der umgeformte Vorsprung sich - im Halbschnitt gesehen - von dem Hohlzylinderelement bis zu dem Formteilkörper erstreckt. Ein solchen Umformen wird erzielt, wenn der Vorsprung vor dem Umformen, also vor dem Beginn des Schweißens, in axialer Richtung die vorstehend genannte Erstreckung aufweist, also eine Erstreckung, die zumindest dem Abstand des Hohlzylinderelements von dem Formteilkörper in radialer Richtung, insbesondere wiederum im Halbschnitt gesehen, entspricht.

Vorzugsweise ist die Erstreckung des Vorsprungs größer als der Abstand, beispielsweise beträgt sie bezogen auf den Abstand wenigstens 110 %, wenigstens 120 %, wenigstens 125 %, wenigstens 130 %, wenigstens 140 % oder wenigstens 150 %. Der Vorsprung kann grundsätzlich jede beliebige Form aufweisen, insbesondere stegförmig ausgestaltet sein, wobei der Steg im Schnitt gesehen eckig, insbesondere rechteckig ist und/oder eine Fase aufweisen kann, insbesondere in Umfangsrichtung durchgehend. Die Fase kann auf der im Halbschnitt dem Formteilkörper abgewandten Seite des Vorsprungs vorliegen.

Die Erfindung betrifft weiterhin eine Formteilanordnung, mit einem Kunststoffformteil, insbesondere einem Kunststoffformteil gemäß den vorstehenden Ausführungen, und einem weiteren Kunststoffformteil, wobei das Kunststoffformteil eine durch Ausbildung einer Stufe gestufte Aufnahme für das weitere Kunststoffformteil aufweist, die in einem Formteilkörper des Kunststoffformteils ausgebildet ist, der wenigstens bereichsweise aus einem schweißbaren Material besteht. Dabei ist vorgesehen, dass an dem Formteilkörper ein Kontaktelement angeordnet ist, das wenigstens teilweise aus einem elektrisch leitfähigem Material besteht und eine sich an die Aufnahme anschließende Ausnehmung des Formteilkörpers wenigstens bereichsweise begrenzt, wobei das Kontaktelement einen Vorsprung aufweist, der in der Ausnehmung angeordnet ist und in Richtung der Aufnahme bis zu einer Innenkante der Stufe ragt.

Auf die Vorteile einer derartigen Ausgestaltung der Formteilanordnung sowie des Kunststoffformteils wurde vorstehend bereits hingewiesen. Sowohl die Formteilanordnung als auch das Kunststoffformteil können gemäß den vorstehenden Ausführungen weitergebildet sein, es wird insoweit auf diese verwiesen.

Die Formteilanordnung weist zumindest das Kunststoffformteil und das weitere Kunststoffformteil auf. Diese können unabhängig voneinander angeordnet sein, also beispielsweise beabstandet voneinander vorliegen. Dies ist vor der Durchführung des Schweißens der Fall. Ebenso können das Kunststoffformteil und das weitere Kunststoffformteil jedoch bereits mittels des Schweißens aneinander befestigt sein. In diesem Fall steht das weitere Kunststoffformteil in elektrischer Verbindung mit dem Kontaktelement und mit dem Kunststoffformteil.

Eine bevorzugte weitere Ausgestaltung der Erfindung sieht vor, dass das weitere Kunststoffformteil bei Anordnung in der Aufnahme einerseits an einem die Aufnahme begrenzenden Hohlzylinderelement des Kunststoffformteils und andererseits an einer Innenumfangsfläche des Formteilkörpers anliegt. Dies ist vorzugsweise bereits vor dem Beginn des Schweißens der Fall.

Die Innenumfangsfläche begrenzt insoweit die Aufnahme, in welcher das weitere Kunststoffformteil anordnungsbar ist, in radialer Richtung nach außen. Das Hohlzylinderelement des Kunststoffformteils begrenzt dagegen die Aufnahme in radialer Richtung nach innen.

Eine weitere Ausgestaltung der Erfindung sieht vor, dass das weitere Kunststoffformteil zumindest bereichsweise aus einem elektrisch leitenden Material besteht, insbesondere massiv aus diesem Material besteht oder eine Leitschicht, insbesondere eine als Innenbeschichtung vorliegende Leitschicht, aus diesem Material aufweist. Während des Schweißens soll dieses elektrisch leitende Material in elektrischen Kontakt mit dem Kontaktelement des Kunststoffformteils treten und so die elektrische Verbindung zwischen dem Kunststoffformteil und dem weiteren Kunststoffformteil herstellen. Besonders bevorzugt liegt das elektrisch leitende Material über die gesamte Längserstreckung des weiteren Kunststoffformteils in Richtung von dessen Längsmittelachse vor. Beispielsweise ist das weitere Kunststoffformteil als Rohrleitung oder als Schlauchleitung ausgestaltet. Eine besonders kostengünstige Realisierung des weiteren Kunststoffformteils ist möglich, wenn das weitere Kunststoffformteil die Innenbeschichtung aufweist, welche aus dem elektrisch leitenden Material besteht, welches zudem optional laserabsorbierend sein kann.

Eine weitere bevorzugte Ausgestaltung der Erfindung sieht vor, dass das weitere Kunststoffformteil einen die Leitschicht tragenden Träger aus einem Material aufweist, das elektrisch schlechter leitet als das Material der Leitschicht. Die Leitschicht ist insoweit auf dem Träger aufgebracht beziehungsweise an ihm angeordnet. In radialer Richtung bezüglich einer Längsmittelachse des weiteren Kunststoffformteils gesehen weist der Träger - insbesondere im Falle der Ausgestaltung der Leitschicht als Innenbeschichtung - vorzugsweise größere Abmessungen auf als die Leitschicht, insbesondere deutlich größer. Beispielsweise beträgt die Materialstärke der Leitschicht, also ihre Erstreckung in radialer Richtung, höchstens 5 %, höchstens 10 %, höchstens 15 %, höchstens 20 % oder höchstens 25 % der Materialstärke des Trägers.

Der Träger besteht aus einem Material, welches beispielsweise ebenso laserabsorbierend ist wie das Material der Leitschicht. Die elektrische Leitfähigkeit des Materials des Trägers ist jedoch vorzugsweise in jedem Fall geringer als die des Materials der Leitschicht. Insoweit ist das Material der Leitschicht von dem Material des weiteren Kunststoffformteils verschieden, kann jedoch das gleiche Grundmaterial aufweisen. Hierauf wurde vorstehend bereits hingewiesen. Der Träger kann aus einer oder aus mehreren Schichten bestehen, welche in radialer Richtung aufeinander folgen, insbesondere unmittelbar. Beispielsweise ist die Leitschicht auf eine dieser Schichten aufgebracht, von einer anderen der Schichten jedoch vollständig von der erstgenannten Schicht separiert, also in radialer Richtung von ihr beabstandet. Es kann jedoch auch vorgesehen sein, dass die Leitschicht zwischen zwei der Schichten vorliegt, also einerseits an der einen und andererseits an der anderen anliegt. Beispielsweise besteht eine äußere der Schichten, also eine Außenschicht, aus einem Material, welches mittels Schweißen, insbesondere mittels Laserschweißen, mit dem Material des Kunststoffformteils beziehungsweise des Formteilkörpers des Kunststoffformteils verbindbar ist. Eine zwischen der Leitschicht und der Außenschicht liegende weitere Schicht kann dagegen grundsätzlich aus einem beliebigen Material bestehen, welches insbesondere nicht schweißbar sein muss beziehungsweise ist. Grundsätzlich ist die Anordnung der Leitschicht und der Schichten also beliebig.

Die Erfindung betrifft schließlich ein Verfahren zum Herstellen einer Formteilanordnung, die über ein Kunststoffformteil, insbesondere ein Kunststoffformteil gemäß den vorstehenden Ausführungen und ein weiteren Kunststoffformteil verfügt, wobei das Kunststoffformteil eine Aufnahme für das weitere Kunststoffformteil aufweist, die in einem Formteilkörper des Kunststoffformteils ausgebildet ist, der wenigstens bereichsweise aus einem schweißbaren Material besteht. Es ist wiederum vorgesehen, dass an dem Formteilkörper ein Kontaktelement angeordnet ist, das wenigstens teilweise aus einem elektrisch leitfähigen Material besteht und eine sich an die Aufnahme anschließende Ausnehmung des Formteilkörpers wenigstens bereichsweise begrenzt, wobei das Kontaktelement einen Vorsprung aufweist, der in der Ausnehmung angeordnet ist und in Richtung der Aufnahme ragt. Weiterhin ist vorgesehen, dass das Kunststoffformteil und weitere Kunststoffformteil während des Schweißens in einer Verlagerungsrichtung aufeinander zu verlagert werden, wobei während des Schweißens der Vorsprung erwärmt und durch das Aufeinanderzuverlagern von Kunststoffformteil und weiterem Kunststoffformteil kraftbeaufschlagt wird, sodass er in Richtung des Grundkörpers verformt wird und gegen eine Stirnseite des weiteren Kunststoffformteils gedrängt wird.

Hinsichtlich möglicher vorteilhafter Ausgestaltungen der Formteilanordnung sowie des Verfahrens zu ihrer Herstellung wird erneut auf die vorstehenden Ausführungen verwiesen. Insbesondere kann das Verfahren zum Herstellen der Formteilanordnung gemäß der Deutschen Patentanmeldung DE 10 2016 204 066 durchgeführt werden, auf welche hiermit vollumfänglich Bezug genommen wird. Bevorzugt kann das Verfahren gemäß einem oder mehreren der Ansprüche der Deutschen Patentanmeldung weitergebildet sein.

Es kann vorgesehen sein, dass das Schweißen als Laserschweißen, Rotationsschweißen, Heißgasschweißen, Infrarotschweißen, Vibrationsschweißen, Ultraschallschweißen, Reibschweißen oder Hochfrequenzschweißen durchgeführt wird. Grundsätzlich kann die Formteilanordnung also mittels eines beliebigen Schweißverfahrens hergestellt werden. Von Bedeutung ist hierbei lediglich, dass das Kunststoffformteil und das weitere Kunststoffformteil während des Schweißens aufeinander zu verlagert werden, wodurch das weitere Kunststoffformteil in Berührkontakt mit dem Kontaktelement tritt. Dabei ist darauf hinzuweisen, dass das Aufeinanderzuverlagern nicht zwingend erfolgen muss, während Wärme in die Formteilanordnung eingebracht wird. Das Schweißen umfasst insoweit zwei separate Vorgänge, nämlich das Einbringen von Wärme, beispielsweise mittels eines Lasers im Falle des Laserschweißens, sowie das Aufeinanderzuverlagern von Kunststoffformteil und weiterem Kunststoffformteil. Es kann vorgesehen sein, dass das Aufeinanderzuverlagern erfolgt, während Wärme eingebracht wird. Es kann jedoch zusätzlich oder alternativ auch erst nach dem Einbringen von Wärme durchgeführt werden.

Es ist beispielsweise vorgesehen, dass nach dem Anordnung des weiteren Kunststoffformteils in der Aufnahme des Kunststoffformteils das weitere Kunststoffformteil von dem Kontaktelement beabstandet angeordnet ist. Erst durch das Aufeinanderzuverlagern beziehungsweise während des Aufeinanderzuverlagerns, das während des Schweißens vorgenommen wird, geraten das weitere Kunststoffformteil und das Kontaktelement in Verbindung, insbesondere in Anlagekontakt und/oder in stoffschlüssige Verbindung, miteinander. Hierdurch wird die elektrische Verbindung zwischen dem weiteren Kunststoffformteil und dem Kontaktelement und mithin zwischen dem weiteren Kunststoffformteil und dem Kunststoffformteil hergestellt. Alternativ kann das weitere Kunststoffformteil bereits vor dem Schweißen an dem Kontaktelement anliegen. Auch hier wird durch das Schweißen die elektrische Verbindung zwischen dem weiteren Kunststoffformteil und dem Kontaktelement hergestellt, insbesondere durch stoffschlüssige Verbindung.

Eine weitere vorteilhafte Ausführungsform der Erfindung sieht vor, dass ein zum Laserschweißen verwendeter Laserstrahl derart ausgerichtet wird, dass er durch den Formteilkörper hindurchtretend auf das weitere Kunststoffformteil und/oder - zumindest zeitweise - auf den Vorsprung trifft. Dies ist insbesondere im Halbschnitt der Fall. Vorstehend wurde bereits erläutert, dass der Formteilkörper aus einem lasertransparenten Material besteht. Entsprechend kann der Laserstrahl durch den Formteilkörper hindurchtreten, insbesondere in radialer Richtung von außen kommend, also in radialer Richtung nach innentretend. Durch den Formteilkörper hindurch trifft der Laserstrahl auf das weitere Kunststoffformteil und schmilzt dieses beziehungsweise das Material, aus welchem es besteht, auf.

Vorzugsweise trifft der Laserstrahl zumindest zeitweise zusätzlich auf den Vorsprung, so dass auch dieser aufgeschmolzen wird. Alternativ kann es - insbesondere im Falle anderer Schweißverfahren - selbstverständlich vorgesehen sein, dass Wärme von dem aufgeschmolzenen Material des weiteren Kunststoffformteils per Wärmeleitung auf den Vorsprung übertragen wird, sodass das Aufschmelzen aufgrund dieser übertragenen Wärme erfolgt. In jedem Fall ist während des Durchführens des Schweißens eine Verformung des Vorsprungs beabsichtigt, welche durch das Aufeinanderzuverlagern des Kunststoffformteils und des weiteren Kunststoffformteils erzielt wird, wobei der Vorsprung einerseits bezüglich des Kunststoffformteils festgelegt ist und andererseits von dem weiteren Kunststoffformteil kraftbeaufschlagt wird. Der Vorsprung kann grundsätzlich beliebig ausgestaltet sein. Beispielsweise weist er im Längsschnitt beziehungsweise im Halblängsschnitt gesehen eine stegartige Form auf. Alternativ kann er selbstverständlich beispielsweise auch dreieckig oder pyramidenförmig sein.

Im Rahmen der Erfindung ist vorgesehen, dass während des Schweißens der Vorsprung erwärmt und durch das Aufeinanderzuverlagern von Kunststoffformteil und weiterem Kunststoffformteil kraftbeaufschlagt wird, sodass er in Richtung des Grundkörpers verformt wird und gegen eine Stirnseite des weiteren Kunststoffformteils gedrängt wird. Das Verformen des Vorsprungs erfolgt dabei derart, dass er in Berührungskontakt, mithin in elektrischen Kontakt, mit dem elektrisch leitenden Material des weiteren Kunststoffformteils, also beispielsweise der Innenbeschichtung des weiteren Kunststoffformteils, tritt. Durch das Kraftbeaufschlagen des Vorsprungs wird er derart gegen die Stirnseite des weiteren Kunststoffformteils gedrängt, dass er nach dem Schweißen vorzugsweise formschlüssig mit dem elektrisch leitenden Material verbunden ist. Beispielsweise gerät das aufgeschmolzene Material des Vorsprungs hierbei in auf der Stirnseite vorliegende Öffnungen, beispielsweise durch das Aufschmelzen des weiteren Kunststoffformteils erzeugte Öffnungen und/oder durch eine Rauigkeit und/oder Unebenheiten des weiteren Kunststoffformteils bewirkte Öffnungen, beispielsweise Riefen oder dergleichen.

Besonders bevorzugt ist vorgesehen, dass das weitere Kunststoffformteil erst während des Schweißens mit dem Kontaktelement in Verbindung gerät, insbesondere in elektrische Verbindung. Beispielsweise ist das weitere Kunststoffformteil vor dem Schweißen, insbesondere unmittelbar vor dem Schweißen, und/oder zumindest unmittelbar zu Beginn des Schweißens von dem Kontaktelement beabstandet angeordnet. Erst während des Schweißens tritt es mit dem Kontaktelement in Kontakt, sodass die elektrische Verbindung zwischen ihnen hergestellt wird. Selbstverständlich kann das weitere Kunststoffformteil jedoch bereits zu Beginn des Schweißens an dem Kontaktelement anliegen. Insbesondere durch das Aufeinanderzuverlagern von Kunststoffformteil und weiterem Kunststoffformteil während des Schweißens wird das weitere Kunststoffformteil, insbesondere sein aufgeschmolzenes Material, an das Kontaktelement gepresst. Hierdurch kann es zu einer Wärmeübertragung derart kommen, dass das Material des Kontaktelements ebenfalls aufschmilzt und sich mit dem Material des weiteren Kunststoffformteils verbindet, nämlich unter Herstellung einer elektrisch leitenden Verbindung.

In anderen Worten ist es vorgesehen, dass während des Schweißens das weitere Kunststoffformteil und/oder das Kontaktelement aufgeschmolzen werden/wird, und dass das aufgeschmolzene Material von weiterem Kunststoffformteil und/oder Kontaktelement sich mit dem jeweils anderen Element beziehungsweise aufgeschmolzenem Material des jeweils anderen Elements verbindet, sodass eine elektrische Verbindung hergestellt wird. In jedem Fall ist vorgesehen, dass das Kontaktelement in Verbindung mit dem elektrisch leitenden Material des weiteren Kunststoffformteils gelangt. Hierzu werden das weitere Kunststoffformteil, das Kontaktelement oder beide umgeformt und stoffschlüssig unter Herstellung der elektrischen Verbindung zwischen ihnen miteinander verbunden.

Im Rahmen einer weiteren Ausführungsform der Erfindung kann vorgesehen sein, dass die Relativposition des Kunststoffformteils und des weiteren Kunststoffformteils zueinander über der Zeit, insbesondere zu wenigstens einem Zeitpunkt, erfasst und zur Qualitätssicherung der Formteilanordnung ausgewertet wird. Der Messzeitraum, in welchem die Relativposition zumindest einmalig erfasst wird, umfasst beispielsweise einen Schweißzeitraum, der sich beispielsweise von einem Beginn des Laserschweißens, also ab dem Erzeugen des Laserstrahls, bis zum Ende des Laserschweißens, also dem Abschalten des Laserstrahls, erstreckt. Zusätzlich kann der Messzeitraum einen Haltezeitraum umfassen, der sich unmittelbar an das Laserschweißen beziehungsweise den Schweißzeitraum anschließt, also an das Abschalten des Laserstrahls. Der Haltezeitraum erstreckt sich bevorzugt über eine bestimmte Zeitspanne, während welcher die beiden Kunststoffformteile weiter aufeinander zu verlagert werden oder zumindest die Verlagerungskraft weiter auf sie aufgeprägt wird.

Innerhalb des Messzeitraums wird die Relativposition wenigstens einmalig, insbesondere mehrmals, besonders bevorzugt kontinuierlich oder periodisch, erfasst. Entspricht die Relativposition einem Sollwert oder liegt sie in einem Sollwertbereich, so wird davon ausgegangen, dass die Formteilanordnung in Ordnung ist. Weicht dagegen die Relativposition von der Sollposition ab oder liegt sie außerhalb des Sollwertbereichs, so wird auf eine nicht ordnungsgemäß hergestellte Formteilanordnung erkannt. Der Sollwert beziehungsweise der Sollwertbereich ist dabei selbstverständlich abhängig von dem Zeitpunkt, in welchem die Relativposition erfasst wird. Wird in dem Messzeitraum die Relativposition mehrmals erfasst, insbesondere also in Form eines Relativpositionsverlaufs, so kann dieser Relativpositionsverlauf mit einem Sollwertverlauf oder dem Sollwertbereich verglichen werden. Entspricht er diesem beziehungsweise liegt er in diesem, so wird wiederum auf eine ordnungsgemäß hergestellte Formteilanordnung geschlossen, während anderenfalls auf die nicht ordnungsgemäß hergestellte Formteilanordnung erkannt wird.

Eine derartige Vorgehensweise erlaubt bereits eine äußerst zuverlässige Überwachung des Herstellverfahrens beziehungsweise eine gute Qualitätssicherung. Der erwähnte Sollwertbereich kann jedoch in der Praxis aufgrund verschiedener Einflüsse nicht so eng gewählt werden, wie eigentlich gewünscht. Um die Qualitätssicherung noch weiter zu verbessern ist es daher vorgesehen, dass ein zwischen dem Kunststoffformteil, insbesondere dem Kontaktelement, und dem weiteren Kunststoffformteil, insbesondere einem aus elektrisch leitfähigem Material bestehenden Bereich des weiteren Kunststoffformteils, vorliegender elektrischer Widerstand ermittelt oder auf ein Vorliegen einer elektrisch leitfähigen Verbindung zwischen dem Kunststoffformteil, insbesondere dem Kontaktelement, und dem weiteren Kunststoffelement, insbesondere dem Bereich, geprüft wird. Anhand des Widerstands kann auf eine ordnungsgemäße Ausbildung der Formteilanordnung geprüft werden. Ist der Widerstand kleiner oder gleich einer bestimmten Widerstandsgrenzwert, so wird davon ausgegangen, dass die Formteilanordnung in Ordnung ist. Ist der Widerstand hingegen größer als der Widerstandsgrenzwert, so wird auf eine nicht ordnungsgemäß hergestellte Formteilanordnung erkannt. Zusätzlich oder alternativ wird bei Vorliegen der Verbindung auf die ordnungsgemäße Herstellung der Formteilanordnung erkannt, bei nicht vorliegender Verbindung auf die nicht ordnungsgemäß hergestellte Formteilanordnung.

Bevorzugt wird der Widerstand beziehungsweise das Vorliegen der Verbindung zu wenigstens einem Zeitpunkt ermittelt. Beispielsweise ist es vorgesehen, das Ermitteln vorzunehmen, wenn anhand der Relativposition erkannt wird, dass die Kunststoffformteile ihre endgültige Position beziehungsweise Relativposition erreicht haben oder zumindest erreicht haben müssten. Alternativ oder zusätzlich kann es vorgesehen sein, die Kunststoffformteile so lange aufeinanderzu zu verlagern, bis der Widerstandswert kleiner oder gleich dem Widerstandsgrenzwert ist oder die elektrische Verbindung vorliegt. Es kann vorgesehen sein, die Qualitätssicherung entweder allein anhand der Relativposition oder allein anhand des Widerstands beziehungsweise der elektrischen Verbindung vorzunehmen. Besonders bevorzugt ist jedoch eine Kombination beider Verfahren.

Auf eine beispielhafte Vorgehensweise hierfür wurde vorstehend bereits hingewiesen. Selbstverständlich kann jedoch eine derartige Kombination der beiden Verfahren grundsätzlich beliebig ausgestaltet sein.

Bei der Überwachung der Relativposition des Kunststoffformteils und des weiteren Kunststoffformteils zueinander kann bei Erreichen oder Überschreiten des Sollwerts beziehungsweise einer Mindestschweißtiefe davon ausgegangen werden, dass die Formteilanordnung ordnungsgemäß ausgebildet wurde. Sobald diese Bedingung erfüllt ist, liegt normalerweise auch die elektrische Verbindung vor. Dies führt wiederum zu der Feststellung, dass bei Vorliegen der elektrischen Verbindung auch die ordnungsgemäße Ausbildung der Formteilanordnung sichergestellt ist.

Es kann - wie vorstehen bereits erläutert - vorgesehen sein, während des Verlagerns von Kunststoffformteil und weiterem Kunststoffformteil aufeinander zu, lediglich die Relativposition zu überwachen, nicht jedoch den Widerstand. Bei Erreichen des Sollwerts, insbesondere der Mindestschweißtiefe durch die Relativposition, wird die Verlagerung beendet und der Widerstand geprüft. Ist dieser ausreichend klein, also kleiner oder gleich dem Widerstandsgrenzwert, so wird auf die ordnungsgemäße Ausbildung der Formteilanordnung erkannt, ansonsten auf eine nicht ordnungsgemäße Ausbildung.

Es kann jedoch auch vorgesehen sein, während des Verlagerns nur den Widerstand und nicht die Relativposition zu überwachen. Sobald der Widerstand den Widerstandsgrenzwert erreicht oder unterschritten hat, wird das Verlagern beendet und von einer ordnungsgemäßen Ausbildung der Formteilanordnung ausgegangen. Wird der Widerstandsgrenzwert durch den Widerstand bis zum Erreichen eines die Verlagerung begrenzenden Endanschlags nicht erreicht, so wird auf die nicht ordnungsgemäße Ausbildung erkannt.

Bevorzugt ist eine Ausführungsform, bei welcher während des Verlagerns sowohl die Relativposition als auch der Widerstand überwacht werden. Erreicht oder überschreitet die Relativposition die Mindestschweißtiefe oder erreicht oder unterschreitet der Widerstand den Widerstandsgrenzwert, so wird das Verlagern beendet und auf die ordnungsgemäße Ausbildung der Formteilanordnung erkannt, ansonsten auf eine nicht ordnungsgemäße Ausbildung. Bei Abweichung der Relativposition von dem Sollwert beziehungsweise dem Sollwertbereich während des Verlagerns oder bei Erreichen des Endanschlags wird auf die nicht ordnungsgemäße Ausbildung erkannt.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Formteilanordnung mit einem ersten Kunststoffformteil und einem zweiten Kunststoffformteil,
- Figur 2: eine schematische Darstellung der Formteilanordnung während eines Laserschweißvorgangs zu einem ersten Zeitpunkt,
- Figur 3: eine schematische Darstellung der Formteilanordnung während des Laserschweißvorgangs zu einem zweiten Zeitpunkt, sowie
- Figur 4: eine schematische Darstellung der Formteilanordnung zu einem dritten Zeitpunkt nach Abschluss des Laserschweißverfahrens.

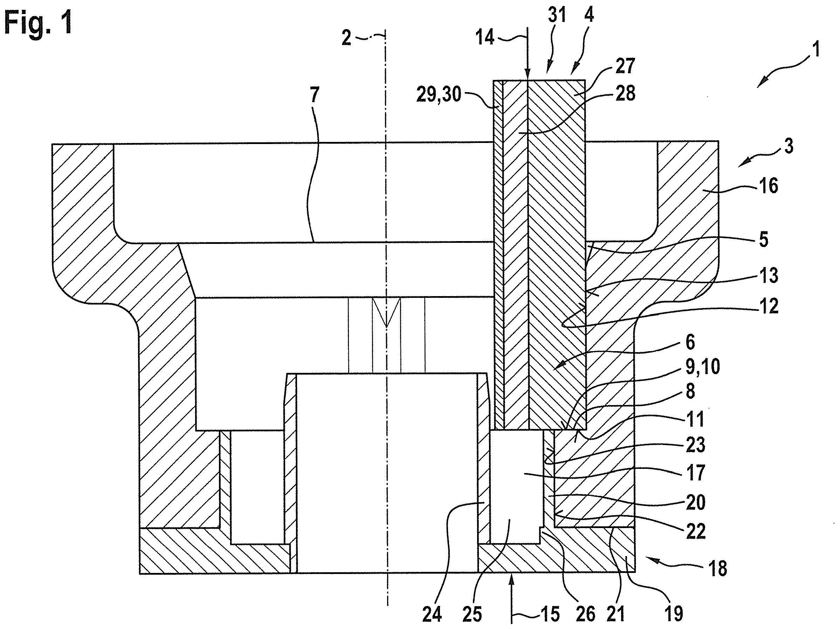

Die Figur 1 zeigt eine schematische Darstellung einer Formteilanordnung 1 im Längsschnitt bezüglich einer Längsmittelachse 2. Die Formteilanordnung 1 weist ein erstes Kunststoffformteil 3 und ein hier lediglich im Halbschnitt dargestelltes zweites Kunststoffformteil 4 auf. Beide Kunststoffformteile 3 und 4 können beispielsweise als Fluidleitungselemente ausgestaltet sein. Sie sind hier jeweils lediglich beispielhaft und schematisch dargestellt. Bevorzugt ist das erste Kunststoffformteil 3 eine Fluidkupplung und das zweite Kunststoffformteil 4 eine Fluidleitung. Die Kunststoffformteile 3 und 4 können grundsätzlich beliebig hergestellt sein, beispielsweise durch Spritzgießen oder Extrudieren. Bevorzugt ist das erste Kunststoffformteil 3 ein Spritzgießformteil und das zweite Kunststoffformteil 4 ein Extrusionsformteil. Auch andere Ausführungsformen sind jedoch möglich.

Das erste Kunststoffformteil 3 weist eine Aufnahme 5 für das zweite Kunststoffformteil 4 beziehungsweise für einen Schweißbereich 6 des zweiten Kunststoffformteils 4 auf. Die Aufnahme 5 verfügt über eine stirnseitig an dem ersten Kunststoffformteil 3 ausgebildete Mündungsöffnung 7 und wird auf der der Mündungsöffnung 7 gegenüberliegenden Seite - in axialer Richtung gesehen - von einer Stufe 8 begrenzt. Die Aufnahme 5 ist insoweit als gestufte Aufnahme ausgestaltet. Die Stufe 8 bewirkt eine Veränderung der Abmessungen beziehungsweise der Innenquerschnittsfläche der Aufnahme 5. Sie bildet in dem hier dargestellten Ausführungsbeispiel zudem bevorzugt einen Endanschlag für das zweite Kunststoffformteil 4. Die Kunststoffformteile 3 und 4 sind entsprechend derart ausgestaltet, dass das zweite Kunststoffformteil 4 bis zum Erreichen der Stufe 8 in die Aufnahme 5 eingebracht werden kann und nachfolgend an dieser anliegt beziehungsweise sich an dieser abstützt.

In der Aufnahme 5 ist eine erste Schweißfläche 9 ausgebildet, die zumindest mit einer Teilfläche 10 in einer ersten Rotationsfläche liegt. Die erste Schweißfläche 9 beziehungsweise die Teilfläche 10 ist dem zweiten Kunststoffformteil 4 zugewandt. Bevorzugt wird die erste Schweißfläche 9, insbesondere die Teilfläche 10, von der Stufe 8 gebildet. Die erste Schweißfläche 9 beziehungsweise ihre Teilfläche 10 ist bevorzugt ringförmig, insbesondere kreisringförmig. Auch eine unrunde Ausgestaltung der Schweißfläche 9 beziehungsweise der Teilfläche 10 ist jedoch möglich. An dem zweiten Kunststoffformteil 4 ist stirnseitig eine zweite Schweißfläche 11 ausgebildet. Diese liegt in einer zweiten Rotationsfläche vor und ist dem ersten Kunststoffformteil 3 zugewandt. Die zweite Schweißfläche 11 liegt an der ersten Schweißfläche 9, insbesondere an der Teilfläche 10 der ersten Schweißfläche 9 an. In dem hier dargestellten Ausführungsbeispiel ist die Stirnseite des zweiten Kunststoffformteils 4 in radialer Richtung größer als die Stufe 8, sodass das zweite Kunststoffformteil 4 im Querschnitt gesehen nach innen über die Stufe 8 übersteht.

An die erste Schweißfläche 9 schließt sich eine Innenumfangsfläche 12 des ersten Kunststoffformteils 3 an, welche die Aufnahme 5 in radialer Richtung nach außen begrenzt. Die Innenumfangsfläche 12 erstreckt sich in axialer Richtung bevorzugt von der ersten Schweißfläche 9 bis hin zu der Mündungsöffnung 7, durch welche das zweite Kunststoffformteil 4 in die Aufnahme 5 einbringbar ist. Bevorzugt ist die Innenumfangsfläche 12 zylindrisch, insbesondere kreiszylindrisch. Auch eine unrunde Ausgestaltung der Innenumfangsfläche 12 kann jedoch realisiert sein. Beispielsweise schließt sie mit der ersten Schweißfläche 9 beziehungsweise der Teilfläche 10 einen bestimmten Winkel ein, insbesondere 90°. Die zweite Schweißfläche 11 grenzt hingegen an eine Außenumfangsfläche 13 des zweiten Kunststoffformteils 4 an. Auch die Außenumfangsfläche 13 kann zylindrisch, insbesondere kreiszylindrisch, sein und schließt mit der zweiten Schweißfläche 11, vorzugsweise - in Umfangsrichtung gesehen, zumindest bereichsweise oder durchgehend - einen Winkel ein, insbesondere einen Winkel von 90°.

Die Kunststoffformteile 3 und 4 sind derart ausgebildet, dass die Innenumfangsfläche 12 und die Außenumfangsfläche 13 jedenfalls nicht oder allenfalls - in Umfangsrichtung gesehen - bereichsweise mit Presspassung zueinander angeordnet sind, sondern nur mit Spielpassung oder Übergangspassung. Bevorzugt ist es vorgesehen, dass die Außenumfangsfläche 13 von hier nicht dargestellten Rippen mit ausgebildet wird, die in Umfangsrichtung voneinander beabstandet an dem Kunststoffformteil 4 ausgebildet sind und in radialer Richtung in Richtung des Kunststoffformteils 3 beziehungsweise in Umfangsfläche 12 ragen. Beispielsweise liegt die Innenumfangsfläche 13 - in Umfangsrichtung gesehen - nur im Bereich der Rippen an der Innenumfangsfläche 12 an und in zwischen den Rippen liegenden Bereichen mit geringerer Flächenpressung oder gar nicht. In letzterem Fall ist die Außenumfangsfläche in den zwischen den Rippen liegenden Bereichen, also von der Innenumfangsfläche beabstandet angeordnet. Die Rippen weisen ihre jeweilige Längsmittelache in axialer Richtung auf, also bevorzugt parallel zu der Längsmittelachse 2. Sie dienen einer einfachen und zuverlässigen Zentrierung des Kunststoffformteils 4 bezüglich des Kunststoffformteils 3 und können entsprechend auch als Zentrierrippen bezeichnet werden.

In der hier dargestellten Ausführungsform sind die erster Rotationsfläche und die zweite Rotationsfläche parallel zueinander angeordnet und stehen beide jeweils senkrecht auf der Längsmittelachse 2 beziehungsweise einer durch die Pfeile 14 und 15 angedeuteten Verlagerungsrichtung der Kunststoffformteile 3 und 4, in der diese während eines Schweißvorgangs, beispielsweise eines Laserschweißvorgangs, aufeinander zu verlagert werden. Die Verlagerungsrichtung ist vorzugsweise parallel zu der Längsmittelachse 2 oder fällt mit dieser zusammen. Die beiden Rotationsflächen liegen in der hier dargestellten Ausführungsform in derselben Ebene oder zumindest in zwei parallel zueinander angeordneten Ebenen.

In der hier dargestellten Ausführungsform weist das erste Kunststoffformteil 3 einen Formteilkörper 16 auf, in welchem die Aufnahme 5 ausgebildet ist. An die Aufnahme 5 schließt sich in dem Formteilkörper 16 eine Ausnehmung 17 an, die auf der der Mündungsöffnung 7 abgewandten Seite der Aufnahme 5 vorliegt. Die Ausnehmung 17 wird wenigstens bereichsweise von einem Kontaktelement 18 begrenzt, welches in dem hier dargestellten Aufführungsbeispiel einen Grundkörper 19 aufweist, von welchem ein Vorsprung 20 ausgeht und sich in Richtung der Aufnahme 5 erstreckt. Der Vorsprung 20 ist vorzugsweise stegartig ausgebildet. Das Kontaktelement 18, insbesondere sein Grundkörper 19, liegt an einer Stirnseite 21 des Formteilkörpers 16 an. Gleichzeitig liegt der Vorsprung 20 mit einer Außenumfangsfläche 22 an einer Innenumfangsfläche 23 an, insbesondere in Umfangsrichtung durchgehend und/oder über seine gesamte Erstreckung in axialer Richtung.

Über das Kontaktelement 18 ist ein Hohlzylinderelement 24 an dem Formteilkörper 16 befestigt. Das Hohlzylinderelement 24 ist ebenso wie das Kontaktelement 18 und der Formteilkörper 16 Bestandteil des ersten Kunststoffformteils 3. Das Hohlzylinderelement 24 ist vorzugsweise als Hohlkreiszylinder ausgestaltet. Das Hohlzylinderelement 24 kann jedoch auch unrund sein. Es dient der Fluidführung durch das erst Kunststoffformteil 3. Bevorzugt erstreckt sich das Hohlzylinderelement 24 in axialer Richtung ausgehend von dem Kontaktelement 18 beziehungsweise dessen Grundkörper 19 bis über die Stufe 8 hinaus, also bis in die Aufnahme 5 hinein. Entsprechend begrenzt das Hohlzylinderelement 24 einen Teilraum der Ausnehmung 17, nämlich in radialer Richtung nach innen. Andererseits wird der Teilraum von dem Kontaktelement 18 begrenzt, nämlich insbesondere in axialer Richtung in die von der Aufnahme 5 abgewandte Richtung von dem Grundkörper 19 und in radialer Richtung nach außen von dem Vorsprung 20. Der Teilraum dient beispielsweise als Aufnahmeraum 25 für aufgeschmolzenes Material, welches während eines Verbindens der Kunststoffformteile 3 und 4 mittels Schweißen anfällt.

In der hier dargestellten Ausführungsform ist der Grundkörper 19 gestuft, weist also wenigstens eine Stufe 26 auf. Entsprechend verfügt er über einen radial innenliegenden Bereich und einen radial außenliegenden Bereich, wobei der Vorsprung 20 von Letzterem ausgeht. Der radial innenliegende Bereich und der radial außenliegende Bereich fluchten auf ihren der Aufnahme 5 abgewandten Seiten miteinander. In Richtung der Aufnahme 5 weist jedoch der radial außenliegende Bereich eine größere Erstreckung in axialer Richtung auf. Die beiden Bereiche liegen vorzugsweise jeweils als Kreisring vor oder sind unrund ausgestaltet.

Weiterhin ist in der hier dargestellten Ausführungsform vorgesehen, dass das zweite Kunststoffformteil 4 mehrschichtig ist und insoweit mehrere Schichten aufweist, hier beispielsweise Schichten 27, 28 und 29. Beispielsweise bestehen die Schichten 27, 28 und 29 aus unterschiedlichen Materialien. Insbesondere ist es dabei vorgesehen, dass die unmittelbar benachbart zu der die Aufnahme 5 in radialer Richtung nach außen begrenzenden Innenumfangsfläche 12 angeordnete Schicht 27 aus einem mit dem Material des ersten Kunststoffformteils 3 beziehungsweise des Formteilkörpers 16 verschweißbaren Material besteht. Die Schicht 28 kann dagegen als Füllschicht ausgebildet sein und insoweit aus einem nicht mit dem Material des ersten Kunststoffformteils 3 beziehungsweise des Formteilkörpers 16 verschweißbaren Material, insbesondere einem kostengünstigen Material, bestehen. Die Schicht 29 ist dagegen bevorzugt derart ausgestaltet, dass sie eine ausreichende Resistenz gegenüber einem in dem zweiten Kunststoffformteil 4 zu transportierenden Fluides aufweist. Beispielsweise besteht die Schicht 29 aus PA6.12 oder PA12. Die Schicht 28 kann aus PA6 bestehen, wohingegen die Schicht 20 beispielsweise aus PPA oder Fluorpolymer hergestellt wird. Das erste Kunststoffformteil 3 beziehungsweise der Formteilkörper 16 besteht vorzugsweise aus demselben Material oder zumindest demselben Grundmaterial wie die Schicht 27.

Bevorzugt ist das Material des Formteilkörpers 16 lasertransparent und das Material des Kontaktelements 18 laserabsorbierend. Das Material zumindest einer der Schichten 27 und 28 ist zum Beispiel laserabsorbierend, vorzugsweise das Material der Schicht 27. Selbstverständlich kann auch das Material beider Schichten 27 und 28 laserabsorbierend sein. Das Material der Schicht 29 ist bevorzugt ebenfalls laserabsorbierend. Das Material des Hohlzylinderelements 24 ist hingegen vorzugsweise lasertransparent. Zusätzlich oder alternativ ist es vorgesehen, dass die Schicht 29 elektrisch leitfähig ist und insoweit aus einem Material besteht, welches eine bessere Leitfähigkeit aufweist als das Material der Schicht 27 und/oder der Schicht 28. Die Schicht 29 liegt vorzugsweise als Innenbeschichtung 30 vor, welche auf einen Träger 31 des zweiten Kunststoffformteils 4 aufgebracht ist. Der Träger wird in dem hier dargestellten Ausführungsbeispiel von den Schichten 27 und 28 gebildet. Das Material des Kontaktelements 18 ist ebenso wie das Material der Schicht 29 elektrisch leitfähig. Zumindest weist es eine bessere elektrische Leitfähigkeit auf als das Material des Formteilkörpers 16 und/oder das Material des Hohlzylinderelements 24.

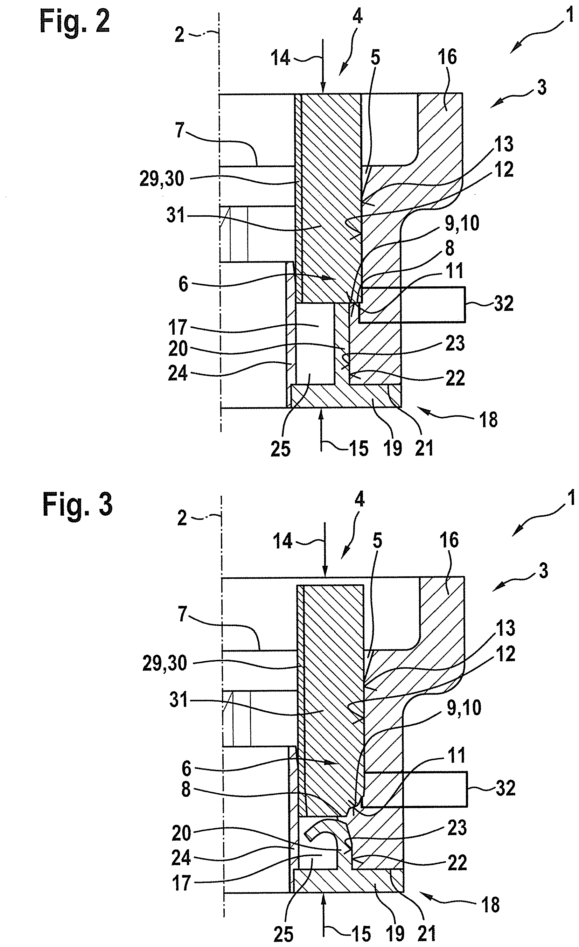

Die Figur 2 zeigt die Formteilanordnung 1 während eines Schweißvorgangs zu einem ersten Zeitpunkt. Dargestellt ist ein zum Durchführend eines Laserschweißvorgangs verwendeter Laserstrahl 32. Selbstverständlich kann das Schweißen jedoch mittels eines beliebigen Schweißverfahrens vorgenommen werden. Rein beispielhaft wird im Rahmen dieser Beschreibung auf ein Laserschweißverfahren eingegangen. Dieses kann jedoch stets durch ein anderes Schweißverfahren ersetzt werden. Zur einfacheren Darstellung sind die Schichten 27 und 28 nicht separat voneinander dargestellt, sondern vielmehr lediglich der Träger 31. Der Zeitpunkt, in welchem die Formteilanordnung 1 dargestellt ist, liegt unmittelbar zu Beginn des Schweißens vor. In diesem Zeitpunkt ist das zweite Kunststoffformteil 4 in der Aufnahme 5 des ersten Kunststoffformteils 3 angeordnet, nämlich derart, dass das zweite Kunststoffformteil 4 stirnseitig an der Stufe 8 und bevorzugt zudem an dem Kontakt 18, insbesondere seinem Vorsprung 20, anliegt. Weil das Material des Formteilkörpers 16 lasertransparent ist, die Materialien des Trägers 31 sowie des Kontaktelements 18 jedoch nicht, werden diese aufgeschmolzen, weil beide von dem Laserstrahl 32 beaufschlagt werden.

Dies ist in der Figur 3 gezeigt, in welcher die Formteilanordnung 1 in einem zweiten Zeitpunkt dargestellt ist, welcher nach dem ersten Zeitpunkt liegt. In dem zweiten Zeitpunkt wurden die Kunststoffformteile 3 und 4 in axialer Richtung bezüglich der Längsmittelachse 2 aufeinander zu verlagert. Aufgrund des während des Schweißens aufgeschmolzenen Materials des zweiten Kunststoffformteils 4 und optional des ersten Kunststoffformteils 3 gelangt das zweite Kunststoffformteil 4 in die Ausnehmung 17, welche sich an die Aufnahme 5 anschließt. Insbesondere gelangt das aufgeschmolzene Material des zweiten Kunststoffformteils 4 in den Aufnahmeraum 25. Aufgrund des Aufeinanderzuverlagerns der Kunststoffformteile 3 und 4 wird der Vorsprung 20 umgeformt, in dem hier dargestellten Ausführungsbeispiel in radialer Richtung nach innen umgebogen. Auch andere Umformungen können jedoch erfolgen und sind im Wesentlichen abhängig von der Geometrie der Kunststoffformteile 3 und 4. In jedem Fall ist es wünschenswert, dass der Vorsprung 20 in Richtung der Schicht 29 umgebogen wird, sich dieser also annähert, insbesondere in radialer Richtung.

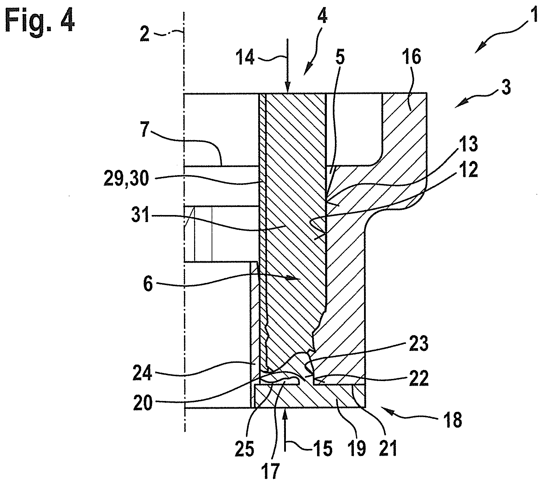

Dieser Zustand ist in der Figur 4 dargestellt, welcher nach Abschluss des Schweißens vorliegt. Entsprechend ist - falls das Laserschweißverfahren verwendet wurde - der Laserstrahl 32 deaktiviert und nicht mehr dargestellt. Es wird deutlich, dass die Schicht 29 in Kontakt mit dem Vorsprung 20 steht, welcher entsprechend umgebogen ist. Durch das Aufeinanderzuverlagern der Kunststoffformteile 3 und 4 wird der Vorsprung 20, insbesondere das aufgeschmolzene Material des Vorsprungs 20, an das zweite Kunststoffformteil 4, insbesondere an die Schicht 29 gedrängt. Insoweit stehen die elektrisch leitfähigen Materialien des Kontaktelements 18 und der Schicht 29 miteinander in Berührungskontakt, sodass eine elektrische Kontaktierung der Kunststoffformteile 3 und 4 realisiert ist.

Die hier beschriebene Formteilanordnung 1 ermöglicht, insbesondere zusammen mit der ebenfalls beschriebenen Vorgehensweise beim Verbinden der Kunststoffformteile 3 und 4 miteinander eine zuverlässige elektrische Kontaktierung bei gleichzeitig hoher mechanischer Festigkeit der durch das Schweißen hergestellten Formteilanordnung 1. Es sei darauf hingewiesen, dass die beschriebene Vorgehensweise auch mit einer Ausgestaltung des Kunststoffformteils 3 angewandt werden kann, bei welcher der Vorsprung 20 nicht vorliegt.

## Patentansprüche

1. Kunststoffformteil (3) für eine Formteilanordnung (1), mit einer durch Ausbildung einer Stufe (8) gestuften Aufnahme (5) für ein weiteres Kunststoffformteil (4) der Formteilanordnung (1), wobei die gestufte Aufnahme (5) in einem Formteilkörper (16) des Kunststoffformteils (3) ausgebildet ist, der wenigstens bereichsweise aus einem schweißbaren Material besteht, **dadurch gekennzeichnet, dass** an dem Formteilkörper (16) ein Kontaktelement (18) angeordnet ist, das wenigstens teilweise aus einem elektrisch leitfähigen Material besteht und eine sich an die Aufnahme (5) anschließende Ausnehmung (17) des Formteilkörpers (16) wenigstens bereichsweise begrenzt, wobei das Kontaktelement (18) einen Vorsprung (20) aufweist, der in der Ausnehmung (17) angeordnet ist und in Richtung der Aufnahme (5) bis zu einer Innenkante der Stufe (8) ragt.

2. Kunststoffformteil nach Anspruch 1, **dadurch gekennzeichnet, dass** der Vorsprung (20) an einer Innenumfangsfläche (23) des die Aufnahme (5) begrenzenden Formteilkörpers (3) anliegt.

3. Kunststoffformteil nach einem der vorhergehenden Ansprüche, **dadurch gekennzeichnet, dass** der Vorsprung (20) von einem Grundkörper (19) des Kontaktelements (18) ausgeht, der an einer Stirnseite (21) des Formteilkörpers (16) angeordnet ist, insbesondere an dieser anliegt.

4. Kunststoffformteil nach einem der vorhergehenden Ansprüche, **dadurch gekennzeichnet, dass** das Kunststoffformteil (3) ein Hohlzylinderelement (24) aufweist, das in der Ausnehmung (17) angeordnet ist und die Aufnahme (5) in radialer Richtung nach innen begrenzend in die Aufnahme (5) hineinragt.

5. Kunststoffformteil nach Anspruch 4, **dadurch gekennzeichnet, dass** das Hohlzylinderelement (24) aus einem lasertransparenten Material besteht und/oder eine Wandstärke aufweist, die geringer ist als eine Wandstärke des Formteilkörpers (16) und/oder eine Wandstärke des Vorsprungs (20).

6. Kunststoffformteil nach einem der Ansprüche 4 oder 5, **dadurch gekennzeichnet, dass** das Hohlzylinderelement (24) über das Kontaktelement (18) und/oder wenigstens einen Steg an dem Formteilkörper (16) befestigt ist.

7. Kunststoffformteil nach einem der vorhergehenden Ansprüche, **dadurch gekennzeichnet, dass** der Vorsprung (20) in Umfangsrichtung durchgehend ausgebildet ist oder in Umfangsrichtung voneinander beabstandete Zungen aufweist.

8. Formteilanordnung (1), mit einem Kunststoffformteil (3) und einem weiteren Kunststoffformteil (4), wobei das Kunststoffformteil (3) eine durch Ausbildung einer Stufe (8) gestufte Aufnahme (5) für das weitere Kunststoffformteil (4) aufweist, die in einem Formteilkörper (16) des Kunststoffformteils (3) ausgebildet ist, der wenigstens bereichsweise aus einem schweißbaren Material besteht, **dadurch gekennzeichnet, dass** an dem Formteilkörper (16) ein Kontaktelement (18) angeordnet ist, das wenigstens teilweise aus einem elektrisch leitfähigen Material besteht und eine sich an die Aufnahme (5) anschließende Ausnehmung (17) des Formteilkörpers (16) wenigstens bereichsweise begrenzt, wobei das Kontaktelement (18) einen Vorsprung (20) aufweist, der in der Ausnehmung (17) angeordnet ist und in Richtung der Aufnahme (5) bis zu einer Innenkante der Stufe (8) ragt.

9. Formteilanordnung nach Anspruch 8, **dadurch gekennzeichnet, dass** das weitere Kunststoffformteil (4) bei Anordnung in der Aufnahme (5) einerseits an einem die Aufnahme (5) begrenzenden Hohlzylinderelement (24) des Kunststoffformteils (3) und andererseits an einer Innenumfangsfläche (12) des Formteilkörpers (16) anliegt.

10. Formteilanordnung nach Anspruch 8 oder 9, **dadurch gekennzeichnet, dass** das weitere Kunststoffformteil (4) zumindest bereichsweise aus einem elektrisch leitenden Material besteht, insbesondere massiv aus diesem Material besteht oder eine Leitschicht, insbesondere eine als Innenbeschichtung (30) vorliegende Leitschicht, aus diesem Material aufweist.

11. Formteilanordnung nach einem der Ansprüche 8 bis 10, **dadurch gekennzeichnet, dass** das weitere Kunststoffformteil (4) einen die Leitschicht tragenden Träger (31) aus einem Material aufweist, das elektrisch schlechter leitet als das Material der Leitschicht.

12. Verfahren zum Herstellen einer Formteilanordnung (1), die über ein Kunststoffformteil (3) und ein weiteres Kunststoffformteil (4) verfügt, wobei das Kunststoffformteil (3) eine Aufnahme (5) für das weitere Kunststoffformteil (4) aufweist, die in einem Formteilkörper (16) des Kunststoffformteils (3) ausgebildet ist, der wenigstens bereichsweise aus einem schweißbaren Material besteht, wobei an dem Formteilkörper (16) ein Kontaktelement (18) angeordnet ist, das wenigstens teilweise aus einem elektrisch leitfähigen Material besteht und eine sich an die Aufnahme (5) anschließende Ausnehmung (17) des Formteilkörpers (16) wenigstens bereichsweise begrenzt, wobei das Kontaktelement (18) einen Vorsprung (20) aufweist, der in der Ausnehmung (17) angeordnet ist und in Richtung der Aufnahme (5) ragt, **dadurch gekennzeichnet, dass** das Kunststoffformteil (3) und das weitere Kunststoffformteil (4) während des Schweißens in einer Verlagerungsrichtung aufeinander zu verlagert werden, wobei während des Schweißens der Vorsprung (20) erwärmt und durch das Aufeinanderzuverlagern von Kunststoffformteil (3) und weiterem Kunststoffformteil (4) kraftbeaufschlagt wird, sodass er in Richtung des Grundkörpers (19) verformt wird und gegen eine Stirnseite des weiteren Kunststoffformteils (4) gedrängt wird.

13. Verfahren nach Anspruch 12, **dadurch gekennzeichnet, dass** das Schweißen als Laserschweißen, Rotationsschweißen, Heißgasschweißen, Infrarotschweißen, Vibrationsschweißen, Ultraschallschweißen, Reibschweißen oder Hochfrequenzschweißen durchgeführt wird.

14. Verfahren nach Anspruch 12 oder 13, **dadurch gekennzeichnet, dass** ein zum Schweißen verwendeter Laserstrahl (32) derart ausgerichtet wird, dass er durch den Formteilkörper (16) hindurchtretend auf das weitere Kunststoffformteil (4) und/oder - zumindest zeitweise - auf den Vorsprung (20) trifft.

## Claims

1. A plastic moulding (3) for a moulding arrangement (1) having a housing (5), stepped due to the formation of a step (8), for another plastic moulding (4) of the moulding arrangement (1), wherein the stepped housing (5) is formed within a moulding body (16) of the plastic moulding (3), which moulding body (16) consists of a weldable material in at least some areas, **characterised in that** on the moulding body (16) a contact element (18) is arranged, consisting at least partly of an electrically conductive material and limiting a recess (17) of the moulding body (16) adjoining the housing (5) in at least some areas, wherein the contact element (18) includes a protrusion (20) arranged in the recess (17) and projecting towards the housing (5) up to an inner edge of the step (8).

2. The plastic moulding according to claim 1, **characterised in that** the protrusion (20) abuts an inner circumferential surface (23) of the moulding body (3) limiting the housing (5).

3. The plastic moulding according to any of the preceding claims, **characterised in that** the protrusion (20) originates from a base body (19) of the contact element (18), the base body being arranged at a front side (21) of the moulding body (16), in particular abutting it.

4. The plastic moulding according to any of the preceding claims, **characterised in that** the plastic moulding (3) includes a hollow cylinder element (24) which is arranged within the recess (17) and projects into the housing (5) in a radial direction such as to limit the housing (5) inwardly.

5. The plastic moulding according to claim 4, **characterised in that** the hollow cylinder element (24) consists of a laser-transparent material and/or has a wall thickness which is less than a wall thickness of the moulding body (16) and/or a wall thickness of the protrusion (20).

6. The plastic moulding according to any one of claims 4 or 5, **characterised in that** the hollow cylinder element (24) is mounted on the moulding body (16) via the contact element (18) and/or at least one crossmember.

7. The plastic moulding according to any of the preceding claims, **characterised in that** the protrusion (20) is continuously formed in a circumferential direction or includes tabs spaced apart in the circumferential direction.

8. A moulding arrangement (1) having a plastic moulding (3) and another plastic moulding (4), wherein the plastic moulding (3) includes a housing (5), stepped due to the formation of a step (8), for the other plastic moulding (4) formed within a moulding body (16) of the plastic moulding (3) consisting of a weldable material in at least some areas, **characterised in that** on the moulding body (16) a contact element (18) is arranged, consisting at least partly of an electrically conductive material and limiting a recess (17) of the moulding body (16) adjoining the housing (5) in at least some areas, wherein the contact element (18) includes a protrusion (20) arranged in the recess (17) and projecting towards the housing (5) up to an inner edge of the step (8).

9. The moulding arrangement according to claim 8, **characterised in that** the other plastic moulding (4), when arranged within the housing (5), abuts a hollow cylinder element (24) of the plastic moulding (3) limiting the housing (5), on the one hand, and an inner circumferential surface (12) of the moulding body (16) on the other.

10. The moulding arrangement according to any of the preceding claims, **characterised in that** the other plastic moulding (4) consists of an electrically conducting material in at least some areas, in particular solidly consisting of this material or including a conducting layer, in particular a conductive layer present as an inner coating (30), made up of this material.

11. The moulding arrangement according to any of the preceding claims, **characterised in that** the other plastic moulding (4) includes a support (31) supporting the conducting layer, the support including a material which is electrically less conductive than the material of the conducting layer.

12. A method for producing the moulding arrangement (1) having a plastic moulding (3) and another plastic moulding (4), wherein the plastic moulding (3) includes a housing (5) for the other plastic moulding (4) which is formed within a moulding body (16) of the plastic moulding (3) consisting of a weldable material in at least some areas, wherein on the moulding body (16) a contact element (18) is arranged, consisting at least partly of an electrically conductive material and limiting a recess (17) of the moulding body (16) adjoining the housing (5) in at least some areas, wherein the contact element (18) includes a protrusion (20) arranged in the recess (17) and projecting towards the housing (5), **characterised in that** the plastic moulding (3) and the other plastic moulding (4) relocated towards each other in an relocating direction during welding, wherein the protrusion (20) is heated up during welding with force being applied onto it by the plastic moulding (3) and the other plastic moulding (4) being relocated towards each other such that it is deformed towards the base body (19) and pressed against a front side of the other plastic moulding (4).

13. The method according to claim 12, **characterised in that** welding may be performed as laser welding, spin welding, hot-gas welding, infrared welding, vibration welding, ultrasound welding, friction welding, or high-frequency welding.

14. The method according to any of the preceding claims, **characterised in that** a laser beam (32) used for welding is oriented such that it impinges the other plastic moulding (4) and/or - at least temporarily - the protrusion (20) while penetrating the moulding body (16).

## Revendications

1. Pièce moulée en plastique (3) pour un ensemble de pièces moulées (1), avec un logement (5), étagé par la réalisation d'un étage (8), pour une autre pièce moulée en plastique (4) de l'ensemble de pièces moulées (1), dans laquelle le logement (5) étagé est réalisé dans un corps de pièce moulée (16) de la pièce moulée en plastique (3), qui est constituée au moins par endroits d'un matériau pouvant être soudé, **caractérisée en ce qu'**est disposé au niveau du corps de pièce moulée (16) un élément de contact (18), qui est constitué au moins en partie d'un matériau électriquement conducteur et délimite au moins par endroits un évidement (17), se raccordant au logement (5), du corps de pièce moulée (16), dans lequel l'élément de contact (18) présente une partie faisant saillie (20), qui est disposée dans l'évidement (17) et dépasse en direction du logement (5) jusqu'à un bord intérieur de l'étage (8).

2. Pièce moulée en plastique selon la revendication 1, **caractérisée en ce que** la partie faisant saillie (20) repose au niveau d'une face périphérique intérieure (23) du corps de pièce moulée (3) délimitant le logement (5).

3. Pièce moulée en plastique selon l'une quelconque des revendications précédentes, **caractérisée en ce que** la partie faisant saillie (20) part d'un corps de base (19) de l'élément de contact (18), qui est disposé au niveau d'un côté frontal (21) du corps de pièce moulée (16), en particulier repose au niveau de celui-ci.

4. Pièce moulée en plastique selon l'une quelconque des revendications précédentes, **caractérisée en ce que** la pièce moulée en plastique (3) présente un élément cylindrique creux (24), qui est disposé dans l'évidement (17) et dépasse dans le logement (5) tout en délimitant dans une direction radiale vers l'intérieur le logement (5).

5. Pièce moulée en plastique selon la revendication 4, **caractérisée en ce que** l'élément cylindrique creux (24) est constitué d'un matériau transparent au laser, et/ou présente une épaisseur de paroi, qui est inférieure à une épaisseur de paroi du corps de pièce moulée (16) et/ou une épaisseur de paroi de la partie faisant saillie (20).

6. Pièce moulée en plastique selon l'une quelconque des revendications 4 ou 5, **caractérisée en ce que** l'élément cylindrique creux (24) est fixé au niveau du corps de pièce moulée (16) par l'intermédiaire de l'élément de contact (18) et/ou d'au moins une entretoise.

7. Pièce moulée en plastique selon l'une quelconque des revendications précédentes, **caractérisée en ce que** la partie faisant saillie (20) est réalisée de manière continue dans la direction périphérique ou présente des languettes tenues à distance les unes des autres dans la direction périphérique.

8. Ensemble de pièces moulées (1), avec une pièce moulée en plastique (3) et une autre pièce moulée en plastique (4), dans lequel la pièce moulée en plastique (3) présente un logement (5), étagé par la réalisation d'un étage (8), pour l'autre pièce moulée en plastique (4), qui est réalisé dans un corps de pièce moulée (16) de la pièce moulée en plastique (3), qui est constitué au moins par endroits d'un matériau pouvant être soudé, **caractérisé en ce qu'**est disposé au niveau du corps de pièce moulée (16) un élément de contact (18), qui est constitué au moins en partie d'un matériau électriquement conducteur et délimite au moins par endroits un évidement (17), se raccordant au logement (5), du corps de pièce moulée (16), dans lequel l'élément de contact (18) présente une partie faisant saillie (20), qui est disposée dans l'évidement (17) et dépasse en direction du logement (5) jusqu'à un bord intérieur de l'étage (8).

9. Ensemble de pièces moulées selon la revendication 8, **caractérisé en ce que** l'autre pièce moulée en plastique (4) repose lors de l'agencement dans le logement (5) d'une part contre un élément cylindrique creux (24), délimitant le logement (5), de la pièce moulée en plastique (3) et d'autre part contre une face périphérique intérieure (12) du corps de pièce moulée (16).

10. Ensemble de pièces moulées selon la revendication 8 ou 9, **caractérisé en ce que** l'autre pièce moulée en plastique (4) est constituée au moins par endroits d'un matériau électriquement conducteur, en particulier est constitué de manière massive dudit matériau ou présente une couche conductrice, en particulier une couche conductrice se présentant en tant que revêtement intérieur (30), composée dudit matériau.

11. Ensemble de pièces moulées selon l'une quelconque des revendications 8 à 10, **caractérisé en ce que** l'autre pièce moulée en plastique (4) présente un support (31) supportant la couche conductrice, composé d'un matériau, dont la conductivité électrique est plus mauvaise que celle du matériau de la couche conductrice.

12. Procédé de fabrication d'un ensemble de pièces moulées (1), qui dispose d'une pièce moulée en plastique (3) et d'une autre pièce moulée en plastique (4), dans lequel la pièce moulée en plastique (3) présente un logement (5) pour l'autre pièce moulée en plastique (4), qui est réalisé dans un corps de pièce moulée (16) de la pièce moulée en plastique (3), qui est constitué au moins par endroits d'un matériau pouvant être soudé, dans lequel est disposé au niveau du corps de pièce moulée (16) un élément de contact (18), qui est constitué au moins en partie d'un matériau électriquement conducteur et délimite au moins par endroits un évidement (17), se raccordant au logement (5), du corps de pièce moulée (16), dans lequel l'élément de contact (18) présente une partie faisant saillie (20), qui est disposée dans l'évidement (17) et dépasse en direction de l'évidement (5), **caractérisé en ce que** la pièce moulée en plastique (3) et l'autre pièce moulée en plastique (4) sont déplacées l'une vers l'autre pendant le soudage dans une direction de déplacement, dans lequel la partie faisant saillie (20) est chauffée au cours du soudage et est soumise à l'action d'une force par le déplacement l'une vers l'autre de la pièce moulée en plastique (3) et de l'autre pièce moulée en plastique (4) de sorte qu'elle est déformée en direction du corps de base (19) et est poussée contre un côté frontal de l'autre pièce moulée en plastique (4).

13. Procédé selon la revendication 12, **caractérisé en ce que** le soudage est mis en œuvre en tant que soudage au laser, soudage par rotation, soudage au gaz chaud, soudage infrarouge, soudage par vibration, soudage par ultrasons, soudage par friction ou soudage à haute fréquence.

14. Procédé selon la revendication 12 ou 13, **caractérisé en ce qu'**un rayon laser (32) utilisé pour le soudage est orienté de telle manière qu'il arrive en traversant le corps de pièce moulée (16) sur l'autre pièce moulée en plastique (4) et/ou - au moins en partie - sur la partie faisant saillie (20).
